(19) Europäisches Patentamt / European Patent Office / Office européen des brevets

(11) **EP 2 612 878 B1**

(12) **EUROPEAN PATENT SPECIFICATION**

(45) Date of publication and mention
of the grant of the patent:
**18.07.2018 Bulletin 2018/29**

(51) Int Cl.:
***C08G 63/08*** (2006.01)   ***C08G 63/80*** (2006.01)
***C08G 63/82*** (2006.01)

(21) Application number: **11821411.3**

(22) Date of filing: **27.06.2011**

(86) International application number:
**PCT/JP2011/064630**

(87) International publication number:
**WO 2012/029393 (08.03.2012 Gazette 2012/10)**

(54) **POLYLACTIC ACID BLOCK COPOLYMER**

POLYMILCHSÄURE-BLOCKCOPOLYMER

COPOLYMÈRE SÉQUENCÉ D'ACIDE POLYLACTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2011 JP 2011075313
27.01.2011 JP 2011014879
31.08.2010 JP 2010193119**

(43) Date of publication of application:
**10.07.2013 Bulletin 2013/28**

(73) Proprietor: **Toray Industries, Inc.
Tokyo 103-8666 (JP)**

(72) Inventors:
• **TAKAHASHI, Yoshitake
Tokai-shi
Aichi 476-0567 (JP)**
• **NAOTSUKA, Takuma
Tokai-shi
Aichi 476-0567 (JP)**
• **SUDO, Ken
Nagoya-shi
Aichi 455-8502 (JP)**

• **OME, Hiroyuki
Tokai-shi
Aichi 476-0567 (JP)**

(74) Representative: **Kador & Partner PartG mbB
Corneliusstraße 15
80469 München (DE)**

(56) References cited:
JP-A- 2002 356 543   JP-A- 2003 096 285
JP-A- 2006 307 071   JP-A- 2007 191 625
JP-A- 2008 063 455   JP-A- 2009 040 997
JP-A- 2010 059 354   US-A1- 2008 039 579

• **MASAYUKI HIRATA ET AL: "Synthesis and
properties of high-molecular-weight stereo
di-block polylactides with nonequivalent D/L
ratios", JOURNAL OF POLYMER SCIENCE, PART
A: POLYMER CHEMISTRY, vol. 48, no. 4, 15
February 2010 (2010-02-15), pages 794-801,
XP055349931, ISSN: 0887-624X, DOI:
10.1002/pola.23827**

**Description**

TECHNICAL FIELD

The present invention relates to a polylactic acid block copolymer that forms a polylactic acid stereocomplex excellent in transparency, heat resistance and mechanical properties.

BACKGROUND ART

Polylactic acid is a macromolecule which can be practically subjected to melt molding, and, because of its biodegradable property, it has been developed as biodegradable plastics that are degraded, after use, under natural environment to be released as carbon dioxide gas and water. In addition, since the raw material of polylactic acid itself is a renewable resource (biomass) originated from carbon dioxide and water, release of carbon dioxide after its use neither increases nor decreases carbon dioxide in the global environment. Such a carbon-neutral nature of polylactic acid is drawing attention in recent years, and it is expected to be used as an eco-friendly material. Further, lactic acid, which is the monomer for polylactic acid, can be inexpensively produced by fermentation methods using microorganisms in recent years, and polylactic acid is therefore being studied as a material alternative to general-purpose polymers made of petroleum-based plastics. However, in comparison with petroleum-based plastics, polylactic acid has lower heat resistance and durability, and also has lower productivity due to its lower crystallization rate. Therefore, its practical use is largely restricted at present.

As a means to solve such problems, use of a polylactic acid stereocomplex is drawing attention. A polylactic acid stereocomplex is formed by mixing optically active poly-L-lactic acid (hereinafter referred to as PLLA) and poly-D-lactic acid (hereinafter referred to as PDLA), and its melting point reaches 220°C, which is 50°C higher than the melting point of a polylactic acid homopolymer, 170°C. Therefore, attempts are being made to apply polylactic acid stereocomplexes to production of fibers, films and resin molded articles having high melting points and high crystallinities.

Conventionally, a polylactic acid stereocomplex is formed by mixing PLLA and PDLA in the solution state or by melt mixing of PLLA and PDLA under heat. However, the method by mixing of PLLA and PDLA solutions requires evaporation of the solvent after the mixing and the production process is therefore laborious, resulting in high cost of the polylactic acid stereocomplex, which is problematic. Further, in the cases of melt mixing of PLLA and PDLA under heat, these need to be mixed at a temperature that allows sufficient melting of the polylactic acid stereocomplex, but such a temperature also causes thermal degradation reaction of polylactic acid, leading to decreased physical properties of the molded article, which is problematic. Further, at present, even in cases where high-molecular-weight PLLA and high-molecular-weight PDLA are melt-mixed under heat, a material having both heat resistance and durability cannot be obtained because of significant presence of the melting points of polylactic acid homopolymers even with a mixing composition ratio of 50:50.

PRIOR ART DOCUMENTS

[Non-Patent Document]

[Non-Patent Document 1 relates to di-stereoblock polyactides obtained by two-step ring-opening polymerisation. Non-Patent Document 1: M. HIRATA et al., JOURNAL OF POLYMER SCIENCE, PART A: POLYMER CHEMISTRY, vol. 48, no. 4, 15. February 2010, pages 794-801

[Patent Documents]

Example of the polylactic acid stereocomplex obtained by melt mixing under heat include the polylactic acid stereocomplex obtained in Patent Document 1 by melt mixing of high-molecular-weight PLLA and low-molecular-weight PDLA having a difference in the weight average molecular weight between the PLLA and PDLA of not less than 50,000. This technique achieves higher stereocomplexation and enables production of a polylactic acid stereocomplex having excellent heat resistance and crystallinity.

Further, as techniques that enable formation of stereocomplexes even with high-molecular-weight polylactic acid, polylactic acid block copolymers composed of PLLA segments and PDLA segments have been disclosed (Patent Documents 2 to 4).

Patent Document 2 relates to a polylactic acid block copolymer obtained by preparing PLLA and PDLA by ring-opening polymerization or direct polycondensation and melt-mixing the prepared PLLA and PDLA under heat to prepare a mixture, followed by subjecting the mixture to solid-phase polymerization.

Patent Document 3 relates to a polylactic acid block copolymer obtained by preparing PLLA and PDLA by melt polymerization and melt-mixing the prepared PLLA and PDLA under heat, followed by subjecting the resulting mixture to solid-phase polymerization.

Patent Document 4 relates to a polylactic acid block copolymer obtained by mixing PLLA and PDLA having different molecular weights at a temperature close to the melting point and subjecting the resulting mixture to solid-phase polymerization in the presence of crystals of the polylactic acids alone.

Patent Document 5 relates to a mixing (blend) type PLA stereocomplex obtained by mixing PLLA having a weight average molecular weight of 100,000 to 500,000 with PDLA having a weight average molecular weight of 100,000 to 500,000. Crystallinity of such stereocomplex is poor and it shows poor transparency.

Patent Document 1: JP 2003-96285 A
Patent Document 2: JP 2003-238672 A
Patent Document 3: JP 2006-28336 A
Patent Document 4: JP 2006-307071 A
Patent Document 5: US 2008/039579 A1

SUMMARY OF THE INVENTION

PROBLEMS TO BE SOLVED BY THE INVENTION

However, in the technique described in Patent Document 1, the kneaded mixture comprises low molecular weight components and the mixture has a large polydispersity as a whole, so that the polylactic acid stereocomplex shows low mechanical properties, which is problematic.

In the technique described in Patent Document 2, heating at a temperature higher than the melting point of the polylactic acid stereocomplex is necessary during melt mixing in order to obtain a polylactic acid block copolymer, so that decreases in the molecular weight and the mechanical properties of the mixture during the melt mixing are problematic.

Since the polylactic acid block copolymer obtained by the technique described in Patent Document 3 shows a melting point derived from stereocomplex crystals, it has high heat resistance, but its low molecular weight leads to low mechanical properties, which is problematic. The problem remains to be solved for practical use of the block copolymer.

In the technique described in Patent Document 4, partial melting is observed during kneading, and this results in variability in the crystal properties of the mixture. The weight average molecular weight after solid-phase polymerization tends to be as high as not less than 100,000, but the polylactic acid block copolymer comprises a low molecular weight component and the polydispersity is as high as not less than 2.7, resulting in low mechanical properties, which is problematic.

An object of the present invention is to solve the problems in the prior art and provide a polylactic acid block copolymer that forms a polylactic acid stereocomplex excellent in transparency, heat resistance and mechanical properties.

MEANS FOR SOLVING THE PROBLEMS

Such an object of the present invention can be achieved with a polylactic acid block copolymer constituted by a poly-L-lactic acid segment(s) containing as a major component L-lactic acid and a poly-D-lactic acid segment(s) containing as a major component D-lactic acid, the polylactic acid block copolymer being defined according to claim 1.

Further, such an object of the present invention can be achieved with a molded product comprising the above polylactic acid block copolymer, the molded product having a relative degree of crystallinity of not less than 90% and comprising a part having a haze value of not more than 30% when the thickness of the molded product is 100 $\mu$m.

In the molecular weight distribution of the polylactic acid block copolymer of the present invention, the ratio of molecular weights of not less than 100,000 is preferably not less than 40%.

In DSC measurement of the polylactic acid block copolymer of the present invention, the cooling crystallization temperature is preferably not less than 130°C when the temperature of the polylactic acid block copolymer is increased to 250°C and then kept constant for 3 minutes, followed by decreasing the temperature at a cooling rate of 20°C/min.

The polydispersity represented by the ratio between the weight average molecular weight and the number average molecular weight is preferably not more than 2.7.

The average sequence length of the L-lactic acid units and D-lactic acid units in the polylactic acid block copolymer of the present invention is preferably not less than 20.

The weight ratio between the L-lactic acid component and the D-lactic acid component in the polylactic acid block copolymer of the present invention is preferably within the range of 80/20 to 60/40 or within the range of 40/60 to 20/80.

The polylactic acid block copolymer of the present invention preferably has a weight average molecular weight of not less than 100,000.

The total number of the segment(s) composed of L-lactic acid units and segment(s) composed of D-lactic acid units contained per one molecule of the polylactic acid block copolymer of the present invention is preferably not less than 3.

EFFECT OF THE INVENTION

According to the present invention, a polylactic acid block copolymer excellent in transparency, heat resistance and mechanical properties can be provided.

BEST MODE FOR CARRYING OUT THE INVENTION

The present invention will now be described in detail.

In the present invention, the polylactic acid block copolymer means a polylactic acid block copolymer in which a segment(s) composed of L-lactic acid units and a segment(s) composed of D-lactic acid units are covalently bonded to each other.

The segment composed of L-lactic acid units herein means a polymer containing L-lactic acid as a major component and containing not less than 70 mol% of L-lactic acid units. The segment comprises more preferably not less than 80 mol%, still more preferably not less than 90 mol%, especially preferably not less than 95 mol%, most preferably not less than 98 mol% of L-lactic acid units.

The segment composed of D-lactic acid units herein means a polymer containing D-lactic acid as a major component and containing not less than 70 mol% of D-lactic acid units. The segment comprises more preferably not less than 80 mol%, still more preferably not less than 90 mol%, especially preferably not less than 95 mol%, most preferably not less than 98 mol% of D-lactic acid units.

In the present invention, the segment composed of L-lactic acid units or D-lactic acid units may comprise other component units as long as the performance of the obtained polylactic acid block copolymer is not adversely affected. Examples of the component units other than L-lactic acid and D-lactic acid units include polycarboxylic acid, polyalcohol, hydroxycarboxylic acid and lactone, and specific examples of the component units include:

polycarboxylic acids such as succinic acid, adipic acid, sebacic acid, fumaric acid, terephthalic acid, isophthalic acid, 2,6-naphthalenedicarboxylic acid, 5-sodium sulfoisophthalic acid, 5-tetrabutylphosphonium sulfoisophthalic acid, and derivatives thereof;

polyalcohols such as ethylene glycol, propylene glycol, butanediol, pentanediol, hexanediol, octanediol, neopentyl glycol, glycerin, trimethylolpropane, pentaerythritol, polyalcohol prepared by addition of ethylene oxide or propylene oxide to trimethylolpropane or pentaerythritol, aromatic polyalcohol prepared by addition reaction of bisphenol with ethylene oxide, diethylene glycol, triethylene glycol, polyethylene glycol and polypropylene glycol, and derivatives thereof;

hydroxycarboxylic acids such as glycolic acid, 3-hydroxybutyric acid, 4-hydroxybutyric acid, 4-hydroxyvaleric acid and 6-hydroxycaproic acid; and

lactones such as glycolide, $\varepsilon$-caprolactone glycolide , $\varepsilon$-caprolactone, $\beta$-propiolactone, $\delta$-butyrolactone, $\beta$- or $\gamma$-butyrolactone, pivalolactone and $\delta$-valerolactone.

Since, in the present invention, stereocomplex formation allows the polylactic acid block copolymer to have a melting point derived from stereocomplex crystals of 190 to 230°C, the polylactic acid block copolymer has higher heat resistance compared to polylactic acid homopolymers. The melting point derived from stereocomplex crystals is preferably within the range of 200°C to 230°C, more preferably within the temperature range of 205°C to 230°C, especially preferably within the temperature range of 210°C to 230°C. In addition, there may be a small melting peak derived from crystals of poly-L-lactic acid alone and crystals of poly-D-lactic acid alone within the range of 150°C to 185°C.

Further, the polylactic acid block copolymer needs to have a degree of stereocomplexation (Sc) of not less than 80% in view of the heat resistance. The degree of stereocomplexation is more preferably within the range of 85 to 100%, especially preferably within the range of 90 to 100%. The degree of stereocomplexation herein means the ratio of stereocomplex crystals with respect to the total crystals in the polylactic acid. More particularly, it can be calculated according to the Equation (4) below, wherein $\Delta$Hl represents the heat of fusion of crystals of poly-L-lactic acid alone and crystals of poly-D-lactic acid alone and $\Delta$Hh represents the heat of fusion of stereocomplex crystals as measured with a differential scanning calorimetry (DSC) by increasing the temperature from 30°C to 250°C at a heating rate of 20°C/min.

$$Sc = \Delta Hh/(\Delta Hl + \Delta Hh) \times 100 \qquad (4)$$

In the present invention, the polylactic acid block copolymer further needs to satisfy the Inequality (5) below.

$$1 < (Tm - Tms)/(Tme - Tm) < 1.8 \qquad (5)$$

In this Inequality, Tm represents the melting point measured with a differential scanning calorimetry (DSC) by increasing the temperature of the polylactic acid block copolymer at a heating rate of 40°C/min. from 30°C to 250°C; Tms represents the beginning temperature of melting measured with a differential scanning calorimetry (DSC) by increasing the temperature of the polylactic acid block copolymer at a heating rate of 40°C/min. from 30°C to 250°C; and Tme represents the end temperature of melting measured by measured with a differential scanning calorimetry (DSC) by increasing the temperature of the polylactic acid block copolymer at a heating rate of 40°C/min. from 30°C to 250°C. A range of $1 < (Tm - Tms)/(Tme - Tm) < 1.6$ is preferred, and a range of $1 < (Tm - Tms)/(Tme - Tm) < 1.4$ is more preferred.

In the present invention, the cooling crystallization temperature (Tc) is preferably not less than 130°C in view of the moldability and the heat resistance of the polylactic acid block copolymer. The cooling crystallization temperature (Tc) of the molded product herein means the crystallization temperature derived from polylactic acid crystals measured with a differential scanning calorimetry (DSC) by increasing the temperature at a heating rate of 20°C/min. from 30°C to 250°C and keeping the temperature constant for 3 minutes at 250°C, followed by decreasing the temperature at a cooling rate of 20°C/min. The crystallization temperature (Tc) is not restricted, and preferably not less than 130°C, more preferably not less than 132°C, especially preferably not less than 135°C in view of the heat resistance and the transparency.

In the present invention, the weight average molecular weight of the polylactic acid block copolymer is preferably not less than 100,000 and less than 300,000 in view of the moldability and the mechanical properties. The weight average molecular weight is more preferably not less than 120,000 and less than 280,000, still more preferably not less than 130,000 and less than 270,000, especially preferably not less than 140,000 and less than 260,000.

The polydispersity of the polylactic acid block copolymer is preferably within the range of 1.5 to 3.0 in view of the mechanical properties. The polydispersity is more preferably within the range of 1.8 to 2.7, especially preferably within the range of 2.0 to 2.4 in view of the moldability and mechanical properties.

In the molecular weight distribution curve of the polylactic acid block copolymer, the ratio of molecular weights of not less than 100,000 is preferably not less than 40% and up to 100% in view of the mechanical properties. The ratio is more preferably not less than 45% and up to 100%, and especially preferably not less than 50% and up to 100% in view of the mechanical properties. The ratio of molecular weights of not less than 100,000 (Mwp) can be calculated according to the Equation (6) below, wherein (c) represents the area of the whole molecular weight distribution curve and (d) represents the area of the portion corresponding to molecular weights of not less than 100,000.

$$Mwp = (d)/(c) \times 100 \qquad (6)$$

The weight average molecular weight, polydispersity and molecular weight distribution are values measured by gel permeation chromatography (GPC) using hexafluoroisopropanol as a solvent and calculated in terms of poly(methyl methacrylate) standards.

In the present invention, the average sequence length of the polylactic acid block copolymer is preferably not less than 20. The average sequence length is more preferably not less than 25, and an average sequence length of not less than 30 is especially preferred in view of the mechanical properties of the molded product. The average sequence length of the polylactic acid block copolymer can be calculated by $^{13}$C-NMR measurement according to the Equation (7) below, wherein (a) represents the integrated value of the peak at about 170.1 to 170.3 ppm among the peaks of carbon belonging to carbonyl carbon and (b) represents the integrated value of the peak at about 169.8 to 170.0 ppm.

$$\text{Average sequence length} = (a)/(b) \qquad (7)$$

In the present invention, the weight ratio between the total segment(s) composed of L-lactic acid units and the total segment(s) composed of D-lactic acid units is preferably 90:10 to 10:90. The weight ratio is more preferably 80:20 to 20:80, especially preferably 75:25 to 60:40 or 40:60 to 25:75. In cases where the weight ratio between the total segment(s) composed of L-lactic acid units and the total segment(s) composed of D-lactic acid units is within the above-described preferred range, a polylactic acid stereocomplex is likely to be formed, resulting in a sufficiently large increase in the melting point of the polylactic acid block copolymer.

In the present invention, the total number of the segment(s) composed of L-lactic acid units and the segment(s) composed of D-lactic acid units per one molecule of the polylactic acid block copolymer is preferably not less than 3 in view of easily forming a polylactic acid stereocomplex having a high melting point and obtaining a molded article having high heat resistance. The total number is more preferably not less than 5, especially preferably not less than 7.

(Method for Producing Polylactic Acid Block Copolymer)

The method for producing a polylactic acid block copolymer is not restricted, and conventional methods for producing polylactic acid may be used. Specific examples of the method include the lactide method wherein either cyclic dimer L-lactide or D-lactide produced from raw material lactic acid is subjected to ring-opening polymerization in the presence of a catalyst and the lactide with the optical isomer to the polylactic acid above described is further added, followed by subjecting the resulting mixture to ring-opening polymerization, to obtain a polylactic acid block copolymer (Production Method 1); a method wherein each of poly-L-lactic acid and poly-D-lactic acid is polymerized by respectively direct polymerization of the raw material or by ring-opening polymerization via lactide, and the obtained poly-L-lactic acid and poly-D-lactic acid are then mixed, followed by obtaining a polylactic acid block copolymer by solid-phase polymerization (Production Method 2); a method wherein poly-L-lactic acid and poly-D-lactic acid are melt-mixed at a temperature of not less than the end of melting point of the component having a higher melting point for a long time to perform transesterification between the segment(s) of L-lactic acid units and the segment(s) of D-lactic acid units, to obtain a polylactic acid block copolymer (Production Method 3); and a method wherein a polyfunctional compound(s) is/are mixed with poly-L-lactic acid and poly-D-lactic acid and the reaction is allowed to proceed to cause covalent bonding of poly-L-lactic acid and poly-D-lactic acid by the polyfunctional compound(s), to obtain a polylactic acid block copolymer (Production Method 4). Any of the production methods may be used, and the method by mixing poly-L-lactic acid and poly-D-lactic acid followed by solid-phase polymerization is preferred since, in this method, the total number of the segment(s) composed of L-lactic acid units and segment(s) composed of D-lactic acid units contained per one molecule of the polylactic acid block copolymer is not less than 3, and a polylactic acid block copolymer having all of excellent heat resistance, crystallinity and mechanical properties can be obtained as a result.

The poly-L-lactic acid herein means a polymer containing L-lactic acid as a major component and containing not less than 70 mol% L-lactic acid units. The poly-L-lactic acid comprises preferably not less than 80 mol%, more preferably not less than 90 mol%, still more preferably not less than 95 mol%, especially preferably not less than 98 mol% L-lactic acid units.

The poly-D-lactic acid herein means a polymer containing D-lactic acid as a major component and containing not less than 70 mol% D-lactic acid units. The poly-D-lactic acid comprises preferably not less than 80 mol%, more preferably not less than 90 mol%, still more preferably not less than 95 mol%, especially preferably not less than 98 mol% D-lactic acid units.

Various methods of polymerization of polylactic acid block copolymers will now be described below in detail.

Examples of the method wherein a polylactic acid block copolymer is obtained by ring-opening polymerization (Production Method 1) include a method wherein one of L-lactide and D-lactide is subjected to ring-opening polymerization in the presence of a catalyst and the lactide with the other optical isomer to the polylactic acid above described is added, followed by subjecting the resulting mixture to ring-opening polymerization, to obtain a polylactic acid block copolymer.

The ratio between the weight average molecular weight of the segment(s) composed of L-lactic acid units and the weight average molecular weight of the segment(s) composed of D-lactic acid units contained per one molecule of the polylactic acid block copolymer obtained by the ring-opening polymerization is not less than 2 and less than 30 in view of the heat resistance, and the transparency of the molded product. The ratio is more preferably not less than 3 and less than 20, especially preferably not less than 5 and less than 15. The ratio between the weight average molecular weight of the segment(s) composed of L-lactic acid units and the weight average molecular weight of the segment(s) composed of D-lactic acid units can be controlled by the weight ratio between L-lactide and D-lactide used upon polymerization of the polylactic acid block copolymer.

The total number of the segment(s) composed of L-lactic acid units and segment(s) composed of D-lactic acid units contained per one molecule of the polylactic acid block copolymer obtained by the ring-opening polymerization is preferably not less than 3 in view of improvement of the heat resistance and the crystallinity. The total number is more preferably not less than 5, especially preferably not less than 7. The weight average molecular weight per segment is preferably 2,000 to 50,000. The weight average molecular weight per segment is more preferably 4,000 to 45,000, especially preferably 5,000 to 40,000.

The optical purity of the L-lactide and D-lactide to be used in the ring-opening polymerization is preferably not less than 90% ee in view of improvement of the crystallinity and the melting point of the polylactic acid block copolymer. The optical purity is more preferably not less than 95% ee, especially preferably not less than 98% ee.

In cases where a polylactic acid block copolymer is obtained by the ring-opening polymerization method, the amount of water in the reaction system is preferably not more than 4 mol% with respect to the total amount of L-lactide and D-lactide in view of obtaining a high molecular weight product. The amount of water is more preferably not more than 2 mol%, especially preferably not more than 0.5 mol%. The amount of water is a value measured by coulometric titration using the Karl-Fischer method.

Examples of the polymerization catalyst used for production of the polylactic acid block copolymer by the ring-opening polymerization method include metal catalysts and acid catalysts. Examples of the metal catalysts include tin compounds, titanium compounds, lead compounds, zinc compounds, cobalt compounds, iron compounds, lithium compounds and rare earth compounds. Preferred examples of the types of the compounds include metal alkoxides, halogen metal compounds, organic carboxylates, carbonates, sulfates and oxides. Specific examples of the tin compounds include tin powder, tin(II) chloride, tin(IV) chloride, tin(II) bromide, tin(IV) bromide, ethoxytin(II), t-butoxytin(IV), isopropoxytin(IV), stannous acetate, tin(IV) acetate, stannous octoate, tin(II) laurate, tin(II) myristate, tin(II) palmitate, tin(II) stearate, tin(II) oleate, tin(II) linoleate, tin(II) acetylacetonate, tin(II) oxalate, tin(II) lactate, tin(II) tartrate, tin(II) pyrophosphate, tin(II) p-phenolsulfonate, tin(II) bis(methanesulfonate), tin(II) sulfate, tin(II) oxide, tin(IV) oxide, tin(II) sulfide, tin(IV) sulfide, dimethyltin(IV) oxide, methylphenyltin(IV) oxide, dibutyltin(IV) oxide, dioctyltin(IV) oxide, diphenyltin(IV) oxide, tributyltin oxide, triethyltin(IV) hydroxide, triphenyltin(IV) hydroxide, tributyltin hydride, monobutyltin(IV) oxide, tetramethyltin(IV), tetraethyltin(IV), tetrabutyltin(IV), dibutyldiphenyltin(IV), tetraphenyltin(IV), tributyltin(IV) acetate, triisobutyltin(IV) acetate, triphenyltin(IV) acetate, dibutyltin diacetate, dibutyltin dioctoate, dibutyltin(IV) dilaurate, dibutyltin(IV) maleate, dibutyltin bis(acetylacetonate), tributyltin(IV) chloride, dibutyltin dichloride, monobutyltin trichloride, dioctyltin dichloride, triphenyltin(IV) chloride, tributyltin sulfide, tributyltin sulfate, tin(II) methanesulfonate, tin(II) ethanesulfonate, tin(II) trifluoromethanesulfonate, ammonium hexachlorostannate(IV), dibutyltin sulfide, diphenyltin sulfide, triethyltin sulfate and tin(II) phthalocyanine. Specific examples of the titanium compounds include titanium methoxide, titanium propoxide, titanium isopropoxide, titanium butoxide, titanium isobutoxide, titanium cyclohexide, titanium phenoxide, titanium chloride, titanium diacetate, titanium triacetate, titanium tetraacetate and titanium(IV) oxide. Specific examples of the lead compounds include diisopropoxylead(II), lead monochloride, lead acetate, lead(II) octoate, lead(II) isooctoate, lead(II) isononanoate, lead(II) laurate, lead(II) oleate, lead(II) linoleate, lead naphthenate, lead(II) neodecanoate, lead oxide and lead(II) sulfate. Specific examples of the zinc compounds include zinc powder, methylpropoxy zinc, zinc chloride, zinc acetate, zinc(II) octoate, zinc naphthenate, zinc carbonate, zinc oxide and zinc sulfate. Specific examples of the cobalt compounds include cobalt chloride, cobalt acetate, cobalt(II) octoate, cobalt(II) isooctoate, cobalt(II) isononanoate, cobalt(II) laurate, cobalt(II) oleate, cobalt(II) linoleate, cobalt naphthenate, cobalt(II) neodecanoate, cobalt(II) carbonate, cobalt(II) sulfate and cobalt(II) oxide. Specific examples of the iron compounds include iron(II) chloride, iron(II) acetate, iron(II) octoate, iron naphthenate, iron(II) carbonate, iron(II) sulfate and iron(II) oxide. Specific examples of the lithium compounds include lithium propoxide, lithium chloride, lithium acetate, lithium octoate, lithium naphthenate, lithium carbonate, dilithium sulfate and lithium oxide. Specific examples of the rare earth compounds include triisopropoxyeuropium(III), triisopropoxyneodymium(III), triisopropoxylanthanum, triisopropoxysamarium(III), triisopropoxyyttrium, isopropoxyyttrium, dysprosium chloride, europium chloride, lanthanum chloride, neodymium chloride, samarium chloride, yttrium chloride, dysprosium(III) triacetate, europium(III) triacetate, lanthanum acetate, neodymium triacetate, samarium acetate, yttrium triacetate, dysprosium(III) carbonate, dysprosium(IV) carbonate, europium(II) carbonate, lanthanum carbonate, neodymium carbonate, samarium(II) carbonate, samarium(III) carbonate, yttrium carbonate, dysprosium sulfate, europium(II) sulfate, lanthanum sulfate, neodymium sulfate, samarium sulfate, yttrium sulfate, europium dioxide, lanthanum oxide, neodymium oxide, samarium(III) oxide and yttrium oxide. Other examples of the metal catalysts include potassium compounds such as potassium isopropoxide, potassium chloride, potassium acetate, potassium octoate, potassium naphthenate, potassium t-butyl carbonate, potassium sulfate and potassium oxide; copper compounds such as copper(II) diisopropoxide, copper(II) chloride, copper(II) acetate, copper octoate, copper naphthenate, copper(II) sulfate and dicopper carbonate; nickel compounds such as nickel chloride, nickel acetate, nickel octoate, nickel carbonate, nickel(II) sulfate and nickel oxide; zirconium compounds such as tetraisopropoxyzirconium(IV), zirconium trichloride, zirconium acetate, zirconium octoate, zirconium naphthenate, zirconium(II) carbonate, zirconium(IV) carbonate, zirconium sulfate and zirconium(II) oxide; antimony compounds such as triisopropoxyantimony, antimony(III) fluoride, antimony(V) fluoride, antimony acetate and antimony(III) oxide; magnesium compounds such as magnesium, magnesium diisopropoxide, magnesium chloride, magnesium acetate, magnesium lactate, magnesium carbonate, magnesium sulfate and magnesium oxide; calcium compounds such as diisopropoxycalcium, calcium chloride, calcium acetate, calcium octoate, calcium naphthenate, calcium lactate and calcium sulfate; aluminum compounds such as aluminum, aluminum isopropoxide, aluminum chloride, aluminum acetate, aluminum octoate, aluminum sulfate and aluminum oxide; germanium compounds such as germanium, tetraisopropoxygermane and germanium(IV) oxide; manganese compounds such as triisopropoxymanganese(III), manganese trichloride, manganese acetate, manganese(II) octoate, manganese(II) naphthenate and manganese(II) sulfate; and bismuth compounds such as bismuth(III) chloride, bismuth powder, bismuth(III) oxide, bismuth acetate, bismuth octoate and bismuth neodecanoate. Still other preferred examples of the metal catalysts include compounds composed of two or more kinds of metallic elements, such as sodium stannate, magnesium stannate, potassium stannate, calcium stannate, manganese stannate, bismuth stannate, barium stannate, strontium stannate, sodium titanate, magnesium titanate, aluminum titanate, potassium titanate, calcium titanate, cobalt titanate, zinc titanate, manganese titanate, zirconium titanate, bismuth titanate, barium titanate and strontium titanate. The acid catalyst may be either a Brønsted acid as a proton donor or a Lewis acid as an electron-pair acceptor, and may be either an organic acid or an inorganic acid. Specific examples of the acid catalyst include monocarboxylic acid compounds such as formic acid, acetic acid, propionic acid, heptanoic acid, octanoic acid, octylic acid, nonanoic acid, isononanoic acid, trifluoroacetic acid and trichloroacetic acid; dicarboxylic acid compounds such as oxalic acid, succinic acid, maleic acid, tartaric acid and malonic acid; tricarboxylic acid compounds such as citric acid and tricarballylic acid; sulfonic acid compounds such as aromatic sulfonic acids including benzenesulfonic acid, n-butylbenzenesulfonic acid, n-octylbenzenesulfonic acid, n-dodecylbenzenesulfonic acid, pentadecylbenzenesulfonic acid, 2,5-dimethylbenzenesulfonic acid, 2,5-dibutylbenzenesulfonic acid, o-aminobenzenesulfonic acid, m-aminobenzenesulfonic acid, p-aminobenzenesulfonic acid, 3-amino 4-hydroxybenzenesulfonic acid, 5-amino-2-methylbenzenesulfonic acid, 3,5-diamino-2,4,6-trimethylbenzenesulfonic acid, 2,4-dinitrobenzenesulfonic acid, p-chlorobenzenesulfonic acid, 2,5-dichlorobenzenesulfonic acid, p-phenolsulfonic acid, cumene sulfonic acid, xylenesulfonic acid, o-cresolsulfonic acid, m-cresolsulfonic acid, p-cresolsulfonic acid, p-toluenesulfonic acid, 2-naphthalenesulfonic acid, 1-naphthalenesulfonic acid, isopropylnaphthalenesulfonic acid, dodecylnaphthalenesulfonic acid, dinonylnaphthalenesulfonic acid, dinonylnaphthalenedisulfonic acid, 1,5-naphthalenedisulfonic acid, 2,7-naphthalenedisulfonic acid, 4,4-biphenyldisulfonic acid, anthraquinone-2-sulfonic acid, m-benzenedisulfonic acid, 2,5-diamino-1,3-benzenedisulfonic acid, aniline-2,4-disulfonic acid, anthraquinone-1,5-disulfonic acid and polystyrene sulfonic acid, aliphatic sulfonic acids including methanesulfonic acid, ethanesulfonic acid, 1-propanesulfonic acid, n-octylsulfonic acid, pentadecylsulfonic acid, trifluoromethanesulfonic acid, trichloromethanesulfonic acid, 1,2-ethanedisulfonic acid, 1,3-propanedisulfonic acid, aminomethanesulfonic acid and 2-aminoethanesulfonic acid, alicyclic sulfonic acids including cyclopentanesulfonic acid, cyclohexanesulfonic acid, camphorsulfonic acid and 3-cyclohexylaminopropanesulfonic acid; acidic amino acids such as aspartic acid and glutamic acid; ascorbic acid; retinoic acid; phosphoric acid compounds such as phosphoric acid, metaphosphoric acid, phosphorous acid, hypophosphorous acid, polyphosphoric acid, phosphoric acid monoesters including monododecyl phosphate and monooctadecyl phosphate, phosphoric acid diesters including didodecyl phosphate and dioctadecyl phosphate, phosphorous acid monoesters and phosphorous acid diesters; boric acid; hydrochloric acid; and sulfuric acid. The form of the acid catalyst is not restricted, and may be either a solid acid catalyst or a liquid acid catalyst. Examples of the solid acid catalyst include natural minerals such as acid clay, kaolinite, bentonite, montmorillonite, talc, zirconium silicate and zeolite; oxides such as silica, alumina, titania and zirconia; oxide complexes such as silica alumina, silica magnesia, silica boria, alumina boria, silica titania and silica zirconia; chlorinated alumina; fluorinated alumina; and positive ion exchange resins.

In the present invention, in consideration of the molecular weight of the polylactic acid produced by the ring-opening polymerization method, the polymerization catalyst for the ring-opening polymerization method is preferably a metal catalyst, and among metal catalysts, tin compounds, titanium compounds, antimony compounds and rare earth compounds are more preferred. In consideration of the melting point of the polylactic acid produced by the ring-opening polymerization method, tin compounds and titanium compounds are more preferred. In consideration of the thermal stability of the polylactic acid produced by the ring-opening polymerization method, tin-based organic carboxylates and tin-based halogen compounds are preferred, and stannous acetate, stannous octoate and tin(II) chloride are more preferred.

The amount of the polymerization catalyst to be added for the ring-opening polymerization is not restricted, and preferably not less than 0.001 part by weight and not more than 2 parts by weight, especially preferably not less than 0.001 part by weight and not more than 1 part by weight with respect to 100 parts by weight of the raw materials used (L-lactic acid, D-lactic acid and/or the like). In cases where the amount of catalyst is within the above-described preferred range, the effect of reducing the polymerization time can be obtained, and the molecular weight of the polylactic acid block copolymer finally obtained tends to be high. Further, in cases where two or more types of catalysts are used in combination, the total amount of the catalysts added is preferably within the above-described range.

The timing of addition of the polymerization catalyst in the ring-opening polymerization is not restricted, and the catalyst is preferably added after melting of the lactide under heat in view of uniform dispersion of the catalyst in the system and enhancement of the polymerization activity.

The method wherein poly-L-lactic acid and poly-D-lactic acid are mixed and solid-phase polymerization is then carried out to obtain a polylactic acid block copolymer (Production Method 2) will now be described below. In this production method, the method of production of poly-L-lactic acid and poly-D-lactic acid may be carried out by either the ring-opening polymerization method or the direct polymerization method.

In cases where poly-L-lactic acid and poly-D-lactic acid are mixed and solid-phase polymerization is then carried out to produce a polylactic acid block copolymer, one of the poly-L-lactic acid and poly-D-lactic acid has a weight average molecular weight of 60,000 to 300,000 and the other has a weight average molecular weight of 1.0,000 to 50,000 in view of increasing the weight average molecular weight and the degree of stereocomplexation after the solid-phase polymerization. More preferably, one of the polylactic acids has a weight average molecular weight of 100,000 to 270,000 and the other has a weight average molecular weight of 15,000 to 45,000. Especially preferably, one of the polylactic acids has a weight average molecular weight of 150,000 to 240,000 and the other has a weight average molecular weight of 20,000 to 40,000. The combination of the weight average molecular weights of the poly-L-lactic acid and poly-D-lactic acid is preferably appropriately selected such that the weight average molecular weight after mixing is not less than 90,000.

In the poly-L-lactic acid and poly-D-lactic acid used in the present invention, the ratio of the polylactic acid having a higher weight average molecular weight with respect to the polylactic acid having a lower average molecular weight is not less than 2 and less than 30. The ratio is more preferably not less than 3 and less than 20, most preferably not less than 5 and less than 15. The combination of the weight average molecular weights of the poly-L-lactic acid and poly-D-lactic acid is preferably appropriately selected such that the weight average molecular weight after mixing is not less than 90,000.

Each of the amount of lactide and the amount of oligomers contained in poly-L-lactic acid or poly-D-lactic acid is preferably not more than 5%. The amount is more preferably not more than 3%, especially preferably not more than 1%. The amount of lactic acid contained in poly-L-lactic acid or poly-D-lactic acid is preferably not more than 2%. The amount is more preferably not more than 1%, especially preferably not more than 0.5%.

In terms of the acid values of the poly-L-lactic acid and poly-D-lactic acid, the acid value of one of the poly-L-lactic acid and poly-D-lactic acid is preferably 100 eq/ton. The value is more preferably not more than 50 eq/ton, still more preferably not more than 30 eq/ton, especially preferably not more than 15 eq/ton. The acid value of the other of the poly-L-lactic acid and poly-D-lactic acid to be mixed is preferably not more than 600 eq/ton. The value is more preferably not more than 300 eq/ton, still more preferably not more than 150 eq/ton, especially preferably not more than 100 eq/ton.

In the method wherein the ring-opening polymerization method is used to produce poly-L-lactic acid or poly-D-lactic acid, the amount of water in the reaction system is preferably not more than 4 mol% with respect to the total amount of L-lactide and D-lactide in view of obtaining a high molecular weight product. The amount of water is more preferably not more than 2 mol%, especially preferably not more than 0.5 mol%. The amount of water is a value measured by coulometric titration using the Karl-Fischer method.

Examples of the polymerization catalyst used for production of poly-L-lactic acid or poly-D-lactic acid by the ring-opening polymerization method include the same metal catalysts and acid catalysts as in Production Method 1.

The amount of the polymerization catalyst to be added for the ring-opening polymerization is not restricted, and preferably not less than 0.001 part by weight and not more than 2 parts by weight, especially preferably not less than 0.001 part by weight and not more than 1 part by weight with respect to 100 parts by weight of the raw materials used (L-lactic acid, D-lactic acid and/or the like). In cases where the amount of catalyst is within the above-described preferred range, the effect of reducing the polymerization time can be obtained, and the molecular weight of the polylactic acid block copolymer finally obtained tends to be high. Further, in cases where two or more types of catalysts are used in combination, the total amount of the catalysts added is preferably within the above-described range.

The timing of addition of the polymerization catalyst in the ring-opening polymerization is not restricted, and the catalyst is preferably added after melting of the lactide under heat in view of uniform dispersion of the catalyst in the system and enhancement of the polymerization activity.

Examples of the polymerization catalyst used for production of poly-L-lactic acid or poly-D-lactic acid by the direct polymerization method include metal catalysts and acid catalysts. Examples of the metal catalysts include tin compounds, titanium compounds, lead compounds, zinc compounds, cobalt compounds, iron compounds, lithium compounds and rare earth compounds. Preferred examples of the types of the compounds include metal alkoxides, halogen metal compounds, organic carboxylates, carbonates, sulfates and oxides. Specific examples of the tin compounds include tin powder, tin(II) chloride, tin(IV) chloride, tin(II) bromide, tin(IV) bromide, ethoxytin(II), t-butoxytin(IV), isopropoxytin(IV), stannous acetate, tin(IV) acetate, stannous octoate, tin(II) laurate, tin(II) myristate, tin(II) palmitate, tin(II) stearate, tin(II) oleate, tin(II) linoleate, tin(II) acetylacetonate, tin(II) oxalate, tin(II) lactate, tin(II) tartrate, tin(II) pyrophosphate, tin(II) p-phenolsulfonate, tin(II) bis(methanesulfonate), tin(II) sulfate, tin(II) oxide, tin(IV) oxide, tin(II) sulfide, tin(IV) sulfide, dimethyltin(IV) oxide, methylphenyltin(IV) oxide, dibutyltin(IV) oxide, dioctyltin(IV) oxide, diphenyltin(IV) oxide, tributyltin oxide, triethyltin(IV) hydroxide, triphenyltin(IV) hydroxide, tributyltin hydride, monobutyltin(IV) oxide, tetramethyltin(IV), tetraethyltin(IV), tetrabutyltin(IV), dibutyldiphenyltin(IV), tetraphenyltin(IV), tributyltin(IV) acetate, triisobutyltin(IV) acetate, triphenyltin(IV) acetate, dibutyltin diacetate, dibutyltin dioctoate, dibutyltin(IV) dilaurate, dibutyltin(IV) maleate, dibutyltin bis(acetylacetonate), tributyltin(IV) chloride, dibutyltin dichloride, monobutyltin trichloride, dioctyltin dichloride, triphenyltin(IV) chloride, tributyltin sulfide, tributyltin sulfate, tin(II) methanesulfonate, tin(II) ethanesulfonate, tin(II) trifluoromethanesulfonate, ammonium hexachlorostannate(IV), dibutyltin sulfide, diphenyltin sulfide, triethyltin sulfate and tin(II) phthalocyanine. Specific examples of the titanium compounds include titanium methoxide, titanium propoxide, titanium isopropoxide, titanium butoxide, titanium isobutoxide, titanium cyclohexide, titanium phenoxide, titanium chloride, titanium diacetate, titanium triacetate, titanium tetraacetate and titanium(IV) oxide. Specific examples of the lead compounds include diisopropoxylead(II), lead monochloride, lead acetate, lead(II) octoate, lead(II) isooctoate, lead(II) isononanoate, lead(II) laurate, lead(II) oleate, lead(II) linoleate, lead naphthenate, lead(II) neodecanoate, lead oxide and lead(II) sulfate. Specific examples of the zinc compounds include zinc powder, methylpropoxy zinc, zinc chloride, zinc acetate, zinc(II) octoate, zinc naphthenate, zinc carbonate, zinc oxide and zinc sulfate. Specific examples of the cobalt compounds include cobalt chloride, cobalt acetate, cobalt(II) octoate, cobalt(II) isooctoate, cobalt(II) isononanoate, cobalt(II) laurate, cobalt(II) oleate, cobalt(II) linoleate, cobalt naphthenate, cobalt(II) neodecanoate, cobalt(II) carbonate, cobalt(II) sulfate and cobalt(II) oxide. Specific examples of the iron compounds include iron(II) chloride, iron(II) acetate, iron(II) octoate, iron naphthenate, iron(II) carbonate, iron(II) sulfate and iron(II) oxide. Specific examples of the lithium compounds include lithium propoxide, lithium chloride, lithium acetate, lithium octoate, lithium naphthenate, lithium carbonate, dilithium sulfate and lithium oxide. Specific examples of the rare earth compounds include triisopropoxyeuropium(III), triisopropoxyneodymium(III), triisopropoxylanthanum, triisopropoxysamarium(III), triisopropoxyyttrium, isopropoxyyttrium, dysprosium chloride, europium chloride, lanthanum chloride, neodymium chloride, samarium chloride, yttrium chloride, dysprosium(III) triacetate, europium(III) triacetate, lanthanum acetate, neodymium triacetate, samarium acetate, yttrium triacetate, dysprosium(III) carbonate, dysprosium(IV) carbonate, europium(II) carbonate, lanthanum carbonate, neodymium carbonate, samarium(II) carbonate, samarium(III) carbonate, yttrium carbonate, dysprosium sulfate, europium(II) sulfate, lanthanum sulfate, neodymium sulfate, samarium sulfate, yttrium sulfate, europium dioxide, lanthanum oxide, neodymium oxide, samarium(III) oxide and yttrium oxide. Other examples of the metal catalysts include potassium compounds such as potassium isopropoxide, potassium chloride, potassium acetate, potassium octoate, potassium naphthenate, potassium t-butyl carbonate, potassium sulfate and potassium oxide; copper compounds such as copper(II) diisopropoxide, copper(II) chloride, copper(II) acetate, copper octoate, copper naphthenate, copper(II) sulfate and dicopper carbonate; nickel compounds such as nickel chloride, nickel acetate, nickel octoate, nickel carbonate, nickel(II) sulfate and nickel oxide; zirconium compounds such as tetraisopropoxyzirconium(IV), zirconium trichloride, zirconium acetate, zirconium octoate, zirconium naphthenate, zirconium(II) carbonate, zirconium(IV) carbonate, zirconium sulfate and zirconium(II) oxide; antimony compounds such as triisopropoxyantimony, antimony(III) fluoride, antimony(V) fluoride, antimony acetate and antimony(III) oxide; magnesium compounds such as magnesium, magnesium diisopropoxide, magnesium chloride, magnesium acetate, magnesium lactate, magnesium carbonate, magnesium sulfate and magnesium oxide; calcium compounds such as diisopropoxycalcium, calcium chloride, calcium acetate, calcium octoate, calcium naphthenate, calcium lactate and calcium sulfate; aluminum compounds such as aluminum, aluminum isopropoxide, aluminum chloride, aluminum acetate, aluminum octoate, aluminum sulfate and aluminum oxide; germanium compounds such as germanium, tetraisopropoxygermane and germanium(IV) oxide; manganese compounds such as triisopropoxymanganese(III), manganese trichloride, manganese acetate, manganese(II) octoate, manganese(II) naphthenate and manganese(II) sulfate; and bismuth compounds such as bismuth(III) chloride, bismuth powder, bismuth(III) oxide, bismuth acetate, bismuth octoate and bismuth neodecanoate. Still other preferred examples of the metal catalysts include compounds composed of two or more kinds of metallic elements, such as sodium stannate, magnesium stannate, potassium stannate, calcium stannate, manganese stannate, bismuth stannate, barium stannate, strontium stannate, sodium titanate, magnesium titanate, aluminum titanate, potassium titanate, calcium titanate, cobalt titanate, zinc titanate, manganese titanate, zirconium titanate, bismuth titanate, barium titanate and strontium titanate. The acid catalyst may be either a Brønsted acid as a proton donor or a Lewis acid as an electron-pair acceptor, and may be either an organic acid or an inorganic acid. Specific examples of the acid catalyst include monocarboxylic acid compounds such as formic acid, acetic acid, propionic acid, heptanoic acid, octanoic acid, octylic acid, nonanoic acid, isononanoic acid, trifluoroacetic acid and trichloroacetic acid; dicarboxylic acid compounds such as oxalic acid, succinic acid, maleic acid, tartaric acid and malonic acid; tricarboxylic acid compounds such as citric acid and tricarballylic acid; sulfonic acid compounds such as aromatic sulfonic acids including benzenesulfonic acid, n-butylbenzenesulfonic acid, n-octylbenzenesulfonic acid, n-dodecylbenzenesulfonic acid, pentadecylbenzenesulfonic acid, 2,5-dimethylbenzenesulfonic acid, 2,5-dibutylbenzenesulfonic acid, o-aminobenzenesulfonic acid, m-aminobenzenesulfonic acid, p-aminobenzenesulfonic acid, 3-amino 4-hydroxybenzenesulfonic acid, 5-amino-2-methylbenzenesulfonic acid, 3,5-diamino-2,4,6-trimethylbenzenesulfonic acid, 2,4-dinitrobenzenesulfonic acid, p-chlorobenzenesulfonic acid, 2,5-dichlorobenzenesulfonic acid, p-phenolsulfonic acid, cumene sulfonic acid, xylenesulfonic acid, o-cresolsulfonic acid, m-cresolsulfonic acid, p-cresolsulfonic acid, p-toluenesulfonic acid, 2-naphthalenesulfonic acid, 1-naphthalenesulfonic acid, isopropylnaphthalenesulfonic acid, dodecylnaphthalenesulfonic acid, dinonylnaphthalenesulfonic acid, dinonylnaphthalenedisulfonic acid, 1,5-naphthalenedisulfonic acid, 2,7-naphthalenedisulfonic acid, 4,4-biphenyldisulfonic acid, anthraquinone-2-sulfonic acid, m-benzenedisulfonic acid, 2,5-diamino-1,3-benzenedisulfonic acid, aniline-2,4-disulfonic acid, anthraquinone-1,5-disulfonic acid and polystyrene sulfonic acid, aliphatic sulfonic acids including methanesulfonic acid, ethanesulfonic acid, 1-propanesulfonic acid, n-octylsulfonic acid, pentadecylsulfonic acid, trifluoromethanesulfonic acid, trichloromethanesulfonic acid, 1,2-ethanedisulfonic acid, 1,3-propanedisulfonic acid, aminomethanesulfonic acid and 2-aminoethanesulfonic acid, alicyclic sulfonic acids including cyclopentanesulfonic acid, cyclohexanesulfonic acid, camphorsulfonic acid and 3-cyclohexylaminopropanesulfonic acid; acidic amino acids such as aspartic acid and glutamic acid; ascorbic acid; retinoic acid; phosphoric acid compounds such as phosphoric acid, metaphosphoric acid, phosphorous acid, hypophosphorous acid, polyphosphoric acid, phosphoric acid monoesters including monododecyl phosphate and monooctadecyl phosphate, phosphoric acid diesters including didodecyl phosphate and dioctadecyl phosphate, phosphorous acid monoesters and phosphorous acid diesters; boric acid; hydrochloric acid; and sulfuric acid. The form of the acid catalyst is not restricted, and may be either a solid acid catalyst or a liquid acid catalyst. Examples of the solid acid catalyst include natural minerals such as acid clay, kaolinite, bentonite, montmorillonite, talc, zirconium silicate and zeolite; oxides such as silica, alumina, titania and zirconia; oxide complexes such as silica alumina, silica magnesia, silica boria, alumina boria, silica titania and silica zirconia; chlorinated alumina; fluorinated alumina; and positive ion exchange resins.

In consideration of the molecular weight of the polylactic acid produced by the direct polymerization method, tin compounds, titanium compounds, antimony compounds, rare earth compounds and acid catalysts are preferred, and, in consideration of the melting point of the produced polylactic acid, tin compounds, titanium compounds and sulfonic acid compounds are more preferred. Further, in view of the thermal stability of the produced polylactic acid, in the case of a metal catalyst, tin-based organic carboxylates and tin-based halogen compounds are preferred, and stannous acetate, stannous octoate and tin(II) chloride are more preferred; and, in the case of an acid catalyst, mono- and disulfonic acid compounds are preferred, and methanesulfonic acid, ethanesulfonic acid, propanesulfonic acid, propanedisulfonic acid, naphthalenedisulfonic acid and 2-aminoethanesulfonic acid are more preferred. The catalyst may be of a single type, or two or more types of catalysts may be used in combination. In view of enhancement of the polymerization activity, two or more types of catalysts are preferably used in combination. In view of also allowing suppression of coloring, one or more selected from tin compounds and/or one or more selected from sulfonic acid compounds is/are preferably used. In view of achievement of excellent productivity, it is preferred to employ stannous acetate and/or stannous octoate in combination with any one or more of methanesulfonic acid, ethanesulfonic acid, propanedisulfonic acid, naphthalenedisulfonic acid and 2-aminoethanesulfonic acid, and it is more preferred to employ stannous acetate and/or stannous octoate in combination with any one of methanesulfonic acid, ethanesulfonic acid, propanedisulfonic acid and 2-aminoethanesulfonic acid.

The amount of polymerization catalyst to be added is not restricted, and preferably not less than 0.001 part by weight and not more than 2 part by weight, especially preferably not less than 0.001 part by weight and not more than 1 part by weight with respect to 100 parts by weight of the raw materials used (L-lactic acid, D-lactic acid and/or the like). In cases where the amount of catalyst is less than 0.001 part by weight, the effect of reducing the polymerization time decreases, and, in cases where the amount is more than 2 parts by weight, the molecular weight of the polylactic acid block copolymer finally obtained is less likely to increase. In cases where two or more types of catalysts are used in combination, the total amount of the catalysts added is preferably within the above-described range. In cases where one or more selected from tin compounds and/or one or more selected from sulfonic acid compounds are used in combination, the weight ratio between the tin compound(s) and the sulfonic acid compound(s) is preferably 1:1 to 1:30 in view of maintenance of high polymerization activity and suppression of coloring, and is preferably 1:2 to 1:15 in view of achievement of excellent productivity.

The timing of addition of the polymerization catalyst is not restricted, and, especially in cases where the polylactic acid is polymerized by the direct polymerization method, an acid catalyst is preferably added to the raw material or before dehydration of the raw material in view of achievement of excellent productivity. A metal catalyst is preferably added after dehydration of the raw material in view of increasing the polymerization activity.

In the present invention, in cases where poly-L-lactic acid and poly-D-lactic acid are mixed and the resulting mixture is subjected to solid-phase polymerization to obtain a polylactic acid block copolymer, poly-L-lactic acid and poly-D-lactic acid are mixed such that a mixture having a degree of stereocomplexation (Sc) within the range of greater than 60% to lower than 99% according to inequality (3) shown in claim 1, immediately before the solid-phase polymerization is obtained. The degree of stereocomplexation (Sc) is more preferably within the range of 70 to 99%, especially preferably within the range of 80 to 95%. The degree of stereocomplexation herein means the ratio of stereocomplex crystals contained with respect to the total crystals in the polylactic acid. More particularly, it can be calculated according to the Equation (8) below, wherein ΔHl represents the heat of fusion of crystals of poly-L-lactic acid alone and crystals of poly-D-lactic acid alone in DSC measurement and ΔHh represents the heat of fusion of stereocomplex crystals as measured with a differential scanning calorimetry (DSC) by increasing the temperature from 30°C to 250°C at a heating rate of 20°C/min.

$$Sc = \Delta Hh/(\Delta Hl + \Delta Hh) \times 100 \quad (8)$$

Whether or not the poly-L-lactic acid and poly-D-lactic acid to be used for the mixing are crystallized is not restricted, and either poly-L-lactic acid and poly-D-lactic acid in the crystallized state may be mixed, or poly-L-lactic acid and poly-D-lactic acid in the molten state may be mixed. In cases where crystallization of the poly-L-lactic acid and poly-D-lactic acid to be used for the mixing is carried out, specific examples of the method thereof include a method wherein the polylactic acids are maintained at a crystallization treatment temperature in the gas phase or liquid phase, a method wherein poly-L-lactic acid and poly-D-lactic acid in the molten state are retained in a melting apparatus at a temperature between the melting point-50°C and the melting point+20°C under shearing, and a method wherein poly-L-lactic acid and poly-D-lactic acid in the molten state are retained in a melting apparatus at a temperature between the melting point-50°C and the melting point+20°C under pressure.

The crystallization treatment temperature herein is not restricted as long as the temperature is higher than the glass-transition temperature and lower than the melting point of the polylactic acid having a lower melting point selected from the poly-L-lactic acid and the poly-D-lactic acid mixed as described above. The crystallization treatment temperature is more preferably between the heating crystallization temperature and the cooling crystallization temperature as measured with a differential scanning calorimetry (DSC) in advance.

The crystallization in the gas phase or liquid phase may be carried out under any of the conditions of reduced, normal and increased pressures.

The crystallization period in the gas phase or liquid phase is not restricted, and the crystallization can be sufficiently achieved within 3 hours, and a length of time of not more than 2 hours is also preferred.

In the above-described method wherein poly-L-lactic acid and poly-D-lactic acid are crystallized under shearing or pressure, the melting apparatus is not restricted as long as shearing or pressurization is possible therewith. Examples of the melting apparatus which may be used include polymerization reactors, kneaders, Banbury mixer, single screw extruders, twin screw extruders and injection molding machines, and the melting apparatus is preferably a single screw extruder or twin screw extruder.

In the method wherein crystallization is carried out in a melting apparatus under shearing or pressure, the crystallization treatment temperature is preferably between the melting point-50°C and the melting point+20°C of the poly-L-lactic acid and poly-D-lactic acid to be mixed. The crystallization temperature is more preferably between the melting point-40°C and the melting point, especially preferably between the melting point-30°C and the melting point-5°C. The temperature of the melting apparatus is conventionally set to a temperature of not less than the melting point+20°C for melting the resin to allow achievement of good fluidity, but, in cases where the temperature of the melting apparatus is set within the above-described preferred range, crystallization proceeds while appropriate fluidity is maintained, and produced crystals are unlikely to be remelted. The melting point herein means the crystal melting temperature measured by differential scanning calorimetry by increasing the temperature from 30°C to 250°C at a heating rate of 20°C/min.

The crystallization treatment time is preferably 0.1 minute to 10 minutes, more preferably 0.3 to 5 minutes, especially preferably within the range of 0.5 minute to 3 minutes. In cases where the crystallization treatment time is within the preferred range, crystallization sufficiently occurs, and thermal degradation is unlikely to occur.

The molecules in molten resin tend to be oriented under shearing in the melting apparatus, and this allows a remarkable increase in the crystallization rate as a result. The shear rate in this step is preferably within the range of 10 to 400/second. In cases where the shear rate is within the preferred range, the crystallization rate is sufficiently large, and thermal degradation due to shear heating is unlikely to occur.

Crystallization tends to be promoted also under pressure, and the pressure is especially preferably within the range of 0.05 to 10 MPa for obtaining crystallized polylactic acid having both good fluidity and crystallinity. In cases where the pressure is within the preferred range, the crystallization rate is sufficiently high.

Further, in cases where the treatment is carried out under both shearing at a shear rate of 10 to 400/second and a pressure of 0.05 to 10 MPa, the crystallization rate is even higher, which is especially preferred.

The method for mixing poly-L-lactic acid and poly-D-lactic acid is a method wherein poly-L-lactic acid and poly-D-lactic acid are melt-mixed at a temperature of not less than the end of melting point of the component having a higher melting point.

The melting point herein means the temperature at the peak top of the peak due to melting of crystals of polylactic acid alone as measured with a differential scanning calorimetry (DSC), and the end of melting point means the temperature at the end of the peak due to melting of crystals of polylactic acid alone as measured with a differential scanning calorimetry (DSC).

Examples of the method wherein melt mixing is performed at a temperature of not less than the end of melting point include a method wherein poly-L-lactic acid and poly-D-lactic acid are mixed by a batch method or continuous method, either of which may be employed for the mixing. Examples of the extruder include single screw extruders, twin screw extruders, plastomill, kneaders and stirring-vessel-type reactors equipped with a pressure reducing device. In view of enabling uniform and sufficient kneading, a single screw extruder or twin screw extruder is preferably used.

In terms of the temperature conditions for melt mixing at a temperature of not less than the end of melting point, poly-L-lactic acid and poly-D-lactic acid are preferably melt-mixed at a temperature of not less than the end of melting point of the component having a higher melting point. The temperature is preferably within the range of 140°C to 250°C, more preferably 160°C to 230°C, especially preferably 180°C to 210°C. In cases where the mixing temperature is within the preferred range, the mixing can be carried out in the molten state, and the molecular weight is unlikely to decrease during the mixing. Further, the fluidity of the mixture can be kept constant and a remarkable decrease in the fluidity is unlikely to occur.

In terms of the time conditions for mixing, the mixing time is preferably within the range of 0.1 minute to 10 minutes, more preferably within the range of 0.3 minute to 5 minutes, especially preferably within the range of 0.5 minute to 3 minutes. In cases where the mixing time is within the preferred range, poly-L-lactic acid and poly-D-lactic acid can be uniformly mixed, and thermal degradation due to mixing is unlikely to occur.

The pressure conditions for the mixing at a temperature of not less than the end of melting point is not restricted, and the mixing may be carried out either in the air or under an atmosphere of an inert gas such as nitrogen.

Specific examples of the method for mixing poly-L-lactic acid and poly-D-lactic acid prepared by crystallizing poly-L-lactic acid and poly-D-lactic acid in a melting apparatus under shearing and/or pressure include mixing by a batch method or continuous method, and either method may be used for the mixing. The degree of stereocomplexation of the mixture of poly-L-lactic acid and poly-D-lactic acid after mixing can be controlled by a method wherein poly-L-lactic acid and poly-D-lactic acid in the molten state are retained in a melting apparatus under shearing at a temperature between the melting point-50°C and the melting point+20°C of the polylactic acid having a lower melting point and by a method wherein poly-L-lactic acid and poly-D-lactic acid in the molten state are retained in a melting apparatus under pressure at a temperature between the melting point-50°C and the melting point+20°C of the polylactic acid having a lower melting point.

The degree of stereocomplexation herein means the ratio of stereocomplex crystals with respect to the total crystals in the polylactic acid. More particularly, it can be calculated according to the Equation (9) below, wherein $\Delta Hl$ represents the heat of fusion of crystals of poly-L-lactic acid alone and crystals of poly-D-lactic acid alone and $\Delta Hh$ represents the heat of fusion of stereocomplex crystals as measured with a differential scanning calorimetry (DSC) by increasing the temperature from 30°C to 250°C at a heating rate of 20°C/min.

$$Sc = \Delta Hh/(\Delta Hl + \Delta Hh) \times 100 \quad (9)$$

Although the degree of stereocomplexation (Sc) can also be calculated from the ratio between crystals of polylactic acid alone and stereocomplex crystals as measured by X-ray diffraction, the value calculated as described above based on the amount of heat due to melting of crystals measured by DSC is employed in the present invention.

The temperature during mixing is preferably between the melting point-50°C and the melting point+20°C of the mixture of poly-L-lactic acid and poly-D-lactic acid. The mixing temperature is more preferably between the melting point-40°C and the melting point, especially preferably between the melting point-30°C and the melting point-5°C. The temperature of the melting apparatus is conventionally preferably set to a temperature of not less than the melting point+20°C for melting the resin to allow achievement of good fluidity, but, in cases where the mixing temperature is set within the above-described preferred range, the fluidity does not decrease too much, and produced crystals are unlikely to be remelted. The melting point herein means the crystal melting temperature measured with a differential scanning calorimetry (DSC) by increasing the temperature from 30°C to 250°C at a heating rate of 20°C/min.

Poly-L-lactic acid and poly-D-lactic acid prepared by crystallizing poly-L-lactic acid and poly-D-lactic acid in a melting apparatus under shearing and/or pressure are preferably mixed at a shear rate within the range of 10 to 400/second. In cases where the shear rate is within the preferred range, poly-L-lactic acid and poly-D-lactic acid can be uniformly mixed while the fluidity and crystallinity are maintained, and thermal degradation due to shear heating is unlikely to occur during the mixing.

The pressure during the mixing is preferably within the range of 0.05 to 10 MPa. In cases where the pressure is within the preferred range, poly-L-lactic acid and poly-D-lactic acid can be uniformly mixed while the fluidity and crystallinity are maintained.

In kneading using an extruder, the method for supplying polylactic acid is not restricted, and examples of possible methods thereof include a method wherein poly-L-lactic acid and poly-D-lactic acid are supplied at once from a resin hopper, and a method wherein, using a side resin hopper as required, poly-L-lactic acid and poly-D-lactic acid are separately supplied via a resin hopper and a side resin hopper. The polylactic acid may also be supplied in the molten state to the extruder directly after the step of producing the polylactic acid.

The screw element of the extruder is preferably equipped with a kneading element in the mixing section such that the poly-L-lactic acid and poly-D-lactic acid can be uniformly mixed to form stereocomplexes.

In the mixing step, the mixing weight ratio between the poly-L-lactic acid composed of L-lactic acid units and the poly-D-lactic acid composed of D-lactic acid units is preferably 90:10 to 10:90. The mixing weight ratio is more preferably 80:20 to 20:80, especially preferably 75:25 to 60:40 or 40:60 to 25:75. In cases where the mixing weight ratio between the total segment(s) composed of L-lactic acid units and the total segment(s) composed of D-lactic acid units is within the above-described preferred range, a polylactic acid stereocomplex is likely to be formed, resulting in a sufficient increase in the melting point of the polylactic acid block copolymer. In cases where the mixing weight ratio between the poly-L-lactic acid and poly-D-lactic acid is other than 50:50, it is preferred to blend the poly-L-lactic acid or poly-D-lactic having a higher weight average molecular weight than the other in a larger amount.

In this mixing step, it is preferred to include a catalyst in the mixture for efficiently promoting the subsequent solid-phase polymerization. The catalyst may be the residual component(s) of the catalyst(s) used for producing the poly-L-lactic acid and/or poly-D-lactic acid, and/or one or more selected from the above-described catalysts may be further added in the mixing step.

The content of the catalyst for efficient promotion of solid-phase polymerization is not restricted, and preferably not less than 0.001 part by weight and not more than 1 part by weight, especially preferably not less than 0.001 part by weight and not more than 0.5 part by weight with respect to 100 parts by weight of the mixture of the poly-L-lactic acid and poly-D-lactic acid. In cases where the amount of catalyst is within the above-described preferred range, the effect of reducing the reaction time of solid-phase polymerization can be obtained, and the molecular weight of the polylactic acid block copolymer finally obtained tends to be high.

The weight average molecular weight (Mw) of the mixture of poly-L-lactic acid and poly-D-lactic acid after the mixing is preferably not less than 90,000 and less than 300,000 in view of the mechanical properties of the mixture. The weight average molecular weight is more preferably not less than 120,000 and less than 300,000, especially preferably not less than 140,000 and less than 300,000.

The polydispersity of the mixture of poly-L-lactic acid and poly-D-lactic acid after mixing is preferably within the range of 1.5 to 4.0. The polydispersity is more preferably within the range of 2.0 to 3.7, especially preferably within the range of 2.5 to 3.5. The polydispersity herein means the ratio of the weight average molecular weight with respect to the number average molecular weight of the mixture, and is more particularly a value measured by gel permeation chromatography (GPC) using hexafluoroisopropanol as a solvent and calculated in terms of poly(methyl methacrylate) standards.

Each of the amount of lactide and the amount of oligomers contained in poly-L-lactic acid or poly-D-lactic acid is preferably not more than 5%. The amount is more preferably not more than 3%, especially preferably not more than 1%. The amount of lactic acid contained in poly-L-lactic acid or poly-D-lactic acid is preferably not more than 2%. The amount is more preferably not more than 1%, especially preferably not more than 0.5%.

When the mixture is subjected to solid-phase polymerization, the form of the mixture of poly-L-lactic acid and poly-D-lactic acid is not restricted, and the mixture may be in the form of a block(s), film(s), pellet(s), powder or the like. In view of efficient promotion of the solid-phase polymerization, a pellet(s) or powder is/are preferably used. Examples of the method for forming the mixture into a pellet(s) include a method wherein the mixture is extruded into a strand-like shape and pelletized, and a method wherein the mixture is extruded into water and pelletized using an underwater cutter. Examples of the method for forming the mixture into powder include a method wherein the mixture is pulverized using a pulverizer such as a mixer, blender, ball mill or hammer mill. The method for carrying out the solid-phase polymerization step is not restricted, and either a batch method or continuous method may be employed. The reactor may be a stirring-vessel-type reactor, mixer-type reactor, column reactor, and two or more types of these reactors may be used in combination.

When this solid-phase polymerization step is carried out, the mixture of poly-L-lactic acid and poly-D-lactic acid is preferably crystallized. In the present invention, in cases where the mixture obtained by the step of mixing poly-L-lactic acid and poly-D-lactic acid is in the crystallized state, crystallization of the mixture of poly-L-lactic acid and poly-D-lactic acid is not necessarily required for carrying out the solid-phase polymerization, but performing crystallization allows further enhancement of the efficiency of solid-phase polymerization.

The method of crystallization is not restricted, and a known method may be employed. Examples of the method include a method by maintaining the polylactic acid at a crystallization treatment temperature in the gas phase or liquid phase and a method by cooling and solidifying a molten mixture of poly-L-lactic acid and poly-D-lactic acid while carrying out the operation of stretching or shearing. In view of simplicity of the operation, the method by maintaining the polylactic acid at a crystallization treatment temperature in the gas phase or liquid phase is preferred.

The crystallization treatment temperature herein is not restricted as long as the temperature is higher than the glass-transition temperature and lower than the melting point of the polylactic acid having a lower melting point selected from the poly-L-lactic acid and the poly-D-lactic acid mixed as described above. The crystallization treatment temperature is more preferably between the heating crystallization temperature and the cooling crystallization temperature preliminarily measured with a differential scanning calorimetry (DSC).

The crystallization may be carried out under any of the conditions of reduced, normal and increased pressures.

The crystallization period is not restricted, and the crystallization can be sufficiently achieved within 3 hours, and a length of time of not more than 2 hours is also preferred.

In terms of the temperature conditions for carrying out the solid-phase polymerization step, a temperature of not more than the melting point of the mixture of poly-L-lactic acid and poly-D-lactic acid is preferred. Since the mixture of poly-L-lactic acid and poly-D-lactic acid has a melting point of 190 to 230°C derived from stereocomplex crystals due to stereocomplex formation and a melting point of 150°C to 185°C derived from crystals of poly-L-lactic acid alone and crystals of poly-D-lactic acid alone, solid-phase polymerization is preferably carried out at a temperature lower than these melting points. More specifically, the temperature is preferably not less than 100°C and not more than 220°C, and, in view of efficiently promoting the solid-phase polymerization, the temperature is more preferably not less than 110°C and not more than 200°C, still more preferably not less than 120°C and not more than 180°C, especially preferably not less than 130°C and not more than 170°C.

For reducing the reaction time of the solid-phase polymerization, the temperature is preferably increased stepwise or continuously as the reaction proceeds. The temperature conditions for increasing the temperature stepwise during the solid-phase polymerization are preferably within the range of 120 to 145°C for 1 to 15 hours in the first step, within the range of 135°C to 160°C for 1 to 15 hours in the second step, and within the range of 150°C to 175°C for 10 to 30 hours in the third step; more preferably within the range of 130 to 145°C for 2 to 12 hours in the first step, within the range of 140°C to 160°C for 2 to 12 hours in the second step, and within the range of 155°C to 175°C for 10 to 25 hours in the third step. In terms of the temperature conditions for increasing the temperature continuously during the solid-phase polymerization, the temperature is preferably increased from an initial temperature of 130°C to 150°C to a temperature of 150°C to 175°C continuously at a rate of 1 to 5°C/min. Further, combination of stepwise temperature increase and continuous temperature increase is also preferred in view of efficient promotion of the solid-phase polymerization.

When the solid-phase polymerization step is carried out, the step is preferably performed under vacuum or under the flow of an inert gas such as dry nitrogen. The degree of vacuum during the solid-phase polymerization under vacuum is preferably not more than 150 Pa, more preferably not more than 75 Pa, especially preferably not more than 20 Pa. The flow rate during the solid-phase polymerization under the flow of an inert gas is preferably within the range of 0.1 to 2,000 mL/min., more preferably within the range of 0.5 to 1,000 mL/min., especially preferably within the range of 1.0 to 500 mL/min., per 1 g of the mixture.

The yield of the polymer after the solid-phase polymerization is preferably not less than 90%. The yield is more preferably not less than 93%, especially preferably not less than 95%. The yield of the polymer herein means the ratio of the weight of the polylactic acid block copolymer after the solid-phase polymerization with respect to the weight of the mixture before the solid-phase polymerization. More specifically, the yield can be calculated according to the Equation (10) below, wherein Wp represents the weight of the mixture before the solid-phase polymerization and Ws represents the weight of the polymer after the solid-phase polymerization.

$$Y = Ws/Wp \times 100 \qquad (10)$$

In the solid-phase polymerization step, the polydispersity of the mixture preferably decreases. More specifically, the polydispersity preferably changes from a value within the range of 1.5 to 4.0, which is for the mixture before the solid-phase polymerization, to a value within the range of 1.5 to 2.7, which is for the polylactic acid block copolymer after the solid-phase polymerization. The polydispersity more preferably decreases from a value within the range of 2.0 to 3.7, which is for the mixture before the solid-phase polymerization, to a value within the range of 1.8 to 2.6, which is for the polylactic acid block copolymer after the solid-phase polymerization. The polydispersity especially preferably changes from a value within the range of 2.5 to 3.5, which is for the mixture before the solid-phase polymerization, to a value within the range of 2.0 to 2.5, which is for the polylactic acid block copolymer after the solid-phase polymerization.

The method wherein poly-L-lactic acid and poly-D-lactic acid are melt-mixed at a temperature of not less than the end of melting point of the component having a higher melting point for a long time to perform transesterification between the segment(s) of L-lactic acid units and the segment(s) of D-lactic acid units, to obtain a polylactic acid block copolymer (Production Method 3) will now be described. Also in this production method, either the ring-opening polymerization method or the direct polymerization method may be used for the method for producing poly-L-lactic acid and poly-D-lactic acid.

For obtaining a polylactic acid block copolymer by this method, one of the poly-L-lactic acid and poly-D-lactic acid has a weight average molecular weight of 60,000 to 300,000 and the other has a weight average molecular weight of 10,000 to 50,000 in view of achieving a high degree of stereocomplexation after melt mixing. More preferably, one of the polylactic acids has a weight average molecular weight of 100,000 to 270,000 and the other has a weight average molecular weight of 15,000 to 45,000. Especially preferably, one of the polylactic acids has a weight average molecular weight of 150,000 to 240,000 and the other has a weight average molecular weight of 20,000 to 40,000. The combination of the weight average molecular weights of the poly-L-lactic acid and poly-D-lactic acid is preferably appropriately selected such that the weight average molecular weight after mixing is not less than 90,000.

Examples of the method for melt-mixing at a temperature of not less than the end of melting point for a long time include a method wherein poly-L-lactic acid and poly-D-lactic acid are mixed by a batch method or continuous method, either of which may be employed for the mixing. Examples of the extruder include single screw extruders, twin screw extruders, plastomill, kneaders and stirring-vessel-type reactors equipped with a pressure reducing device. In view of enabling uniform and sufficient kneading, a single screw extruder or twin screw extruder is preferably used.

In terms of the temperature conditions for the mixing, the mixing needs to be carried out at a temperature of not less than the end of melting point of the component having a higher melting point selected from the poly-L-lactic acid and poly-D-lactic acid. The temperature is within the range of preferably 140°C to 250°C, more preferably 160°C to 230°C, especially preferably 180°C to 210°C. In cases where the mixing temperature is within the above-described preferred range, the fluidity does not decrease too much and the molecular weight of the mixture is unlikely to decrease.

In terms of the time conditions for the mixing, the length of time is within the range of preferably 0.1 to 30 minutes, more preferably 0.3 to 20 minutes, especially preferably 0.5 to 10 minutes. In cases where the mixing time is within the above-described preferred range, the poly-L-lactic acid and poly-D-lactic acid can be uniformly mixed, and thermal degradation is less likely to occur by the mixing.

The pressure conditions during the mixing are not restricted, and the mixing may be carried out either in the air or under an atmosphere of an inert gas such as nitrogen.

The mixing weight ratio between the poly-L-lactic acid composed of L-lactic acid units and the poly-D-lactic acid composed of D-lactic acid units to be mixed is preferably 80:20 to 20:80, more preferably 75:25 to 25:75, still more preferably 70:30 to 30:70, especially preferably 60:40 to 40:60. In cases where the weight ratio of the poly-L-lactic acid composed of L-lactic acid units is within the above-described preferred range, a polylactic acid stereocomplex is likely to be formed, resulting in a sufficient increase in the melting point of the polylactic acid block copolymer finally obtained.

In order to efficiently promote transesterification between the segment(s) of L-lactic acid units and the segment(s) of D-lactic acid units in this mixing step, a catalyst is preferably included in the mixture. The catalyst may be the residual component(s) of the catalyst(s) used for producing the poly-L-lactic acid and/or poly-D-lactic acid, and/or a catalyst(s) may be further added in the mixing step.

The content of the catalyst is not restricted, and preferably not less than 0.001 part by weight and not more than 1 part by weight, especially preferably not less than 0.001 part by weight and not more than 0.5 part by weight with respect to 100 parts by weight of the mixture of the poly-L-lactic acid and poly-D-lactic acid. In cases where the amount of catalyst is within the above-described preferred range, the frequency of transesterification of the mixture is sufficiently high, and the molecular weight of the polylactic acid block copolymer finally obtained tends to be high.

The method wherein a polyfunctional compound(s) is/are mixed with poly-L-lactic acid and poly-D-lactic acid to cause covalent bonding of poly-L-lactic acid and poly-D-lactic acid by the polyfunctional compound(s) to obtain a polylactic acid block copolymer (Production Method 4) will now be described. The poly-L-lactic acid and poly-D-lactic acid to be used in this production method may be produced by either the ring-opening polymerization method or the direct polymerization method.

Preferably, in terms of the weight average molecular weight of the poly-L-lactic acid and poly-D-lactic acid used for obtaining a polylactic acid block copolymer in this method, one of the poly-L-lactic acid and poly-D-lactic acid has a weight average molecular weight of 60,000 to 100,000 and the other has a weight average molecular weight of 10,000 to 30,000 in view of increasing the degree of stereocomplexation. More preferably, one of the polylactic acids has a weight average molecular weight of 60,000 to 90,000 and the other has a weight average molecular weight of 10,000 to 25,000. Especially preferably, one of the polylactic acids has a weight average molecular weight of 60,000 to 80,000 and the other has a weight average molecular weight of 10,000 to 20,000.

The ratio between the weight average molecular weight of the poly-L-lactic acid and the weight average molecular weight of the poly-D-lactic acid used in the above-described mixing is preferably not less than 2 and less than 10 in view of increasing the degree of stereocomplexation. The ratio is more preferably not less than 3 and less than 10, especially preferably not less than 4 and less than 10.

The polyfunctional compound(s) to be used herein is/are not restricted, and examples thereof include polycarboxylic anhydrides, polycarboxylic acid halides, polycarboxylic acids, polyisocyanates, polyamines, polyalcohols and polyepoxy compounds. Specific examples of the polyfunctional compound(s) include polycarboxylic anhydrides such as 1,2-cyclohexanedicarboxylic anhydride, succinic anhydride, phthalic anhydride, trimellitic anhydride, 1,8-naphthalenedicarboxylic anhydride and pyromellitic anhydride; polycarboxylic acid halides such as isophthalic acid chloride, terephthalic acid chloride and 2,6-naphthalenedicarboxylic acid chloride; polycarboxylic acids such as succinic acid, adipic acid, sebacic acid, fumaric acid, terephthalic acid, isophthalic acid and 2,6-naphthalenedicarboxylic acid; polyisocyanates such as hexamethylene diisocyanate, 4,4'-diphenylmethane diisocyanate and toluene-2,4-diisocyanate; polyamines such as ethylenediamine, hexanediamine and diethylene triamine; polyalcohols such as ethylene glycol, propylene glycol, butanediol, hexanediol, glycerin, trimethylolpropane and pentaerythritol; and polyepoxy compounds such as diglycidyl terephthalate, naphthalenedicarboxylic acid diglycidyl ester, trimellitic acid triglycidyl ester, pyromellitic acid tetraglycidyl ester, ethylene glycol diglycidyl ether, propylene glycol diglycidyl ether, cyclohexane dimethanol diglycidyl ether, glycerol triglycidyl ether, trimethylolpropane triglycidyl ether and pentaerythritol polyglycidyl ether. The polyfunctional compound(s) is/are preferably a polycarboxylic anhydride(s), polyisocyanate(s), polyalcohol(s) and/or polyepoxy compound(s), and is/are especially preferably a polycarboxylic anhydride(s), polyisocyanate(s) and/or polyepoxy compound(s). One of these or a combination of two or more of these may be used.

The amount of the polyfunctional compound(s) to be mixed is not restricted, and is preferably not less than 0.01 part by weight and not more than 20 parts by weight, more preferably not less than 0.1 part by weight and not more than 10 parts by weight with respect to 100 parts by weight of the total of poly-L-lactic acid and poly-D-lactic acid. In cases where the amount of the polyfunctional compound(s) added is within the above-described preferred range, the effect of forming covalent bonds can be sufficiently produced.

Further, when a polyfunctional compound(s) is/are used, a reaction catalyst(s) may be added for promoting the reaction of poly-L-lactic acid and poly-D-lactic acid with the polyfunctional compound(s). Examples of the reaction catalyst(s) include alkali metal compounds such as sodium hydroxide, potassium hydroxide, lithium hydroxide, cesium hydroxide, sodium hydrogen carbonate, potassium hydrogen carbonate, sodium carbonate, potassium carbonate, lithium carbonate, sodium acetate, potassium acetate, lithium acetate, sodium stearate, potassium stearate, lithium stearate, sodium borohydride, lithium borohydride, sodium phenylborate, sodium benzoate, potassium benzoate, lithium benzoate, disodium hydrogenphosphate, dipotassium hydrogenphosphate, dilithium hydrogenphosphate, disodium salt of bisphenol A, dipotassium salt of bisphenol A, dilithium salt of bisphenol A, sodium salt of phenol, potassium salt of phenol, lithium salt of phenol and cesium salt of phenol; alkaline earth metal compounds such as calcium hydroxide, barium hydroxide, magnesium hydroxide, strontium hydroxide, calcium hydrogen carbonate, barium carbonate, magnesium carbonate, strontium carbonate, calcium acetate, barium acetate, magnesium acetate, strontium acetate, calcium stearate, magnesium stearate and strontium stearate; tertiary amines such as triethylamine, tributylamine, trihexylamine, triamylamine, triethanolamine, dimethyl aminoethanol, triethylenediamine, dimethylphenylamine, dimethylbenzylamine, 2-(dimethylaminomethyl)phenol, dimethylaniline, pyridine, picoline and 1,8-diazabicyclo(5,4,0)undecene-7; imidazole compounds such as 2-methylimidazole, 2-ethylimidazole, 2-isopropylimidazole, 2-ethyl-4-methylimidazole and 4-phenyl-2-methylimidazole; quaternary ammonium salts such as tetramethylammonium chloride, tetraethylammonium chloride, tetrabutylammonium bromide, trimethylbenzylammonium chloride, triethylbenzylammonium chloride, tripropylbenzylammonium chloride and N-methylpyridinium chloride; phosphine compounds such as trimethylphosphine, triethylphosphine, tributylphosphine and trioctylphosphine; phosphonium salts such as tetramethylphosphonium bromide, tetrabutylphosphonium bromide, tetraphenylphosphonium bromide, ethyltriphenylphosphonium bromide and triphenylbenzylphosphonium bromide; phosphoric acid esters such as trimethyl phosphate, triethyl phosphate, tributyl phosphate, trioctyl phosphate, tributoxyethyl phosphate, triphenyl phosphate, tricresyl phosphate, trixylenyl phosphate, cresyl diphenyl phosphate, octyl diphenyl phosphate, tri(p-hydroxy)phenyl phosphate and tri(p-methoxy)phenyl phosphate; organic acids such as oxalic acid, p-toluenesulfonic acid, dinonylnaphthalene disulfonic acid and dodecylbenzenesulfonic acid; and Lewis acids such as boron trifluoride, aluminum tetrachloride, titanium tetrachloride and tin tetrachloride. One of these or a combination of two or more of these may be used.

The amount of the catalyst(s) to be added is not restricted, and is preferably not less than 0.001 part by weight and not more than 1 part by weight with respect to - 100 parts by weight of the total of poly-L-lactic acid and poly-D-lactic acid. In cases where the amount of the catalyst(s) is within the above-described preferred range, the effect of promoting the reaction can be obtained, and the molecular weight of the polylactic acid block copolymer finally obtained tends to be high.

In terms of the temperature conditions for melt mixing, the melt mixing is preferably carried out at a temperature of not less than the end of melting point of the component having a higher melting point selected from the poly-L-lactic acid and poly-D-lactic acid. The temperature is preferably within the range of 140°C to 250° C, more preferably 160°C to 230°C, especially preferably 180 to 210°C. In cases where the mixing temperature is within the above-described preferred range, the fluidity does not decrease too much, and the molecular weight of the mixture is unlikely to decrease.

In terms of the time conditions for the melt mixing, the length of time is within the range of preferably 0.1 to 30 minutes, more preferably 0.3 to 20 minutes, especially preferably 0.5 to 10 minutes. In cases where the mixing time is within the above-described preferred range, the poly-L-lactic acid and poly-D-lactic acid can be uniformly mixed, and thermal degradation is less likely to occur during the mixing.

The pressure conditions during the melt mixing are not restricted, and the mixing may be carried out either in the air or under an atmosphere of an inert gas such as nitrogen.

The mixing weight ratio between the poly-L-lactic acid composed of L-lactic acid units and the poly-D-lactic acid composed of D-lactic acid units to be mixed is preferably 90:10 to 10:90, more preferably 80:20 to 20:80. The mixing weight ratio is especially preferably 75:25 to 60:40 or 40:60 to 25:75. In cases where the weight ratio of the poly-L-lactic acid composed of L-lactic acid units is within the above-described preferred range, a polylactic acid stereocomplex is likely to be formed, resulting in a sufficient increase in the melting point of the polylactic acid block copolymer finally obtained.

Although the polylactic acid block copolymer obtained by mixing a polyfunctional compound(s) with poly-L-lactic acid and poly-D-lactic acid is a high molecular weight product because of covalent bonding of poly-L-lactic acid and poly-D-lactic acid caused by the polyfunctional compound(s), solid-phase polymerization may also be carried out by the above-mentioned method after the mixing.

In the present invention, a catalyst deactivating agent(s) is/are preferably added after the polylactic acid block copolymer was obtained. In cases where a polymerization catalyst is remaining, the residual catalyst may cause thermal degradation of the polylactic acid block copolymer during melt mixing or melt molding. By adding a catalyst deactivating agent(s), thermal degradation can be suppressed and the thermal stability can be improved.

Examples of the catalyst deactivating agent in the present invention include hindered phenol compounds, thioether compounds, vitamin compounds, triazole compounds, polyamine compounds, compounds of hydrazine derivatives and phosphorous compounds, and these may also be used in combination. Among these, at least one of phosphorous compounds is preferably contained, and the phosphorous compound(s) is/are more preferably a phosphate compound(s) and/or phosphite compound(s). Still more preferred specific examples of the compounds include "Adekastab" AX-71 (dioctadecyl phosphate), PEP-8 (distearyl pentaerythritol diphosphite) and PEP-36 (cyclic neopentatetraylbis(2,6-t-butyl-4-methylphenyl)phosphite) manufactured by ADEKA Corporation.

Specific examples of the hindered phenol compounds include n-octadecyl-3-(3',5'-di-t-butyl-4'-hydroxyphenyl)-propionate, n-octadecyl-3-(3'-methyl-5'-t-butyl-4'-hydroxyphenyl)-propionate, n-tetradecyl-3-(3',5'-di-t-butyl-4'-hydroxyphenyl)-propionate, 1,6-hexanediol-bis-[3-(3,5-di-t-butyl-4-hydroxyphenyl)-propionate], 1,4-butanediol-bis-[3-(3,5-di-t-butyl-4-hydroxyphenyl)-propionate], 2,2'-methylenebis-(4-methyl-t-butylphenol), triethylene glycol-bis-[3-(3-t-butyl-5-methyl-4-hydroxyphenyl)-propionate], tetrakis[methylene-3-(3',5'-di-t-butyl-4'-hydroxyphenyl)propionate]methane, 3,9-bis[2-{3-(3-t-butyl-4-hydroxy-5-methylphenyl)propionyloxy}-1,1-dimethylethyl]2,4,8,10-tetraoxaspiro(5,5)undecane, N,N'-bis-3-(3',5'-di-t-butyl-4'-hydroxyphenyl)propionylhexamethylenediamine, N,N'-tetramethylene-bis-3-(3'-methyl-5'-t-butyl-4'-hydroxyphenol)propionyldiamine, N,N'-bis-[3-(3,5-di-t-butyl-4-hydroxyphenol)propionyl]hydrazine, N-salicyloyl-N'-salicylidenehydrazine, 3-(N-salicyloyl)amino-1,2,4-triazole, N,N'-bis[2-{3-(3,5-di-t-butyl-4-hydroxyphenyl)propionyloxy}ethyl]oxyamide, pentaerythrityl-tetrakis[3-(3,5-di-t-butyl-4-hydroxyphenyl)propionate] and N,N'-hexamethylenebis(3,5-di-t-butyl-4-hydroxy-hydrocinnamide). Preferred examples of the hindered phenol compounds include triethylene glycol-bis-[3-(3-t-butyl-5-methyl-4-hydroxyphenyl)-propionate], tetrakis[methylene-3-(3',5'-di-t-butyl-4'-hydroxyphenyl) propionate]methane, 1,6-hexanediol-bis-[3-(3,5-di-t-butyl-4-hydroxyphenyl)-propionate], pentaerythrityl-tetrakis[3-(3,5-di-t-butyl-4-hydroxyphenyl)propionate] and N,N'-hexamethylenebis(3,5-di-t-butyl-4-hydroxy-hydrocinnamide). Specific examples of trade names of the hindered phenol compounds include "Adekastab" AO-20, AO-30, AO-40, AO-50, AO-60, AO-70, AO-80 and AO-330 manufactured by ADEKA Corporation; "Irganox" 245, 259, 565, 1010, 1035, 1076, 1098, 1222, 1330, 1425, 1520, 3114 and 5057 manufactured by Ciba Specialty Chemicals; "Sumilizer" BHT-R, MDP-S, BBM-S, WX-R, NW, BP-76, BP-101, GA-80, GM and GS manufactured by Sumitomo Chemical Co., Ltd.; and "Cyanox" CY-1790 manufactured by Saianamido Inc.

Specific examples of the thioether compounds include dilauryl thiodipropionate, ditridecyl thiodipropionate, dimyristyl thiodipropionate, distearyl thiodipropionate, pentaerythritol-tetrakis(3-laurylthiopropionate), pentaerythritol-tetrakis(3-dodecylthiopropionate), pentaerythritol-tetrakis(3-octadecylthiopropionate), and pentaerythritol-tetrakis(3-myristylthiopropionate) and pentaerythritol-tetrakis(3-stearylthiopropionate). Specific examples of trade names of the thioether compounds include "Adekastab" AO-23, AO-412S and AO-503A manufactured by ADEKA Corporation; "Irganox" PS802 manufactured by Ciba Specialty Chemicals; "Sumilizer" TPL-R, TPM, TPS and TP-D manufactured by Sumitomo Chemical Co., Ltd.; DSTP, DLTP, DLTOIB and DMTP manufactured by API Corporation; "Seenox" 412S manufactured by Shipro Kasei Kaisha, Ltd.; and "Cyanox" 1212 manufactured by Saianamido Inc.

Specific examples of the polyamine compounds include 3,9-bis[2-(3,5-diamino-2,4,6-triazaphenyl)ethyl]-2,4,8,10-tetraoxaspiro[5.5]undecane, ethylenediamine-tetraacetic acid, alkali metal (Li, Na, K) salts of ethylenediaminetetraacetic acid, N,N'-disalicylidene-ethylenediamine, N,N'-disalicylidene-1,2-propylenediamine, N,N"-disalicylidene-N'-methyl-dipropylenetriamine and 3-salicyloylamino-1,2,4-triazole.

Specific examples of the compounds of hydrazine derivatives include decamethylenedicarboxylic acid-bis(N'-salicyloyl-hydrazide), isophthalic acid bis(2-phenoxypropionylhydrazide), N-formyl-N'-salicyloylhydrazine, 2,2-oxamido-bis-[ethyl-3-(3,5-di-t-butyl-4-hydroxyphenyl)propionate], oxalyl-bis-benzylidene-hydrazide, nickel-bis(1-phenyl-3-methyl-4-decanoyl-5-pyazolate), 2-ethoxy-2'-ethyloxanilide, 5-t-butyl-2-ethoxy-2'-ethyloxanilide, N,N-diethyl-N',N'-diphenyloxamide, N,N'-diethyl-N,N'-diphenyloxamide, oxalic acid-bis(benzylidenehydrazide), thiodipropionic acid-bis(benzylidenehydrazide), bis(salicyloylhydrazine), N-salicylidene-N'-salicyloylhydrazone, N,N'-bis[3-(3,5-di-t-butyl-4-hydroxyphenyl)propionyl]hydrazine and N,N'-bis[2-{3-(3,5-di-t-butyl-4-hydroxyphenyl)propionyloxy}ethyl]oxamide.

Examples of the phosphorous compounds include phosphite compounds and phosphate compounds. Specific examples of the phosphite compounds include tetrakis[2-t-butyl-4-thio(2'-methyl-4'-hydroxy-5'-t-butylphenyl]-5-methylphenyl]-1,6-hexamethylene-bis(N-hydroxyethyl-N-methylsemicarbazide)-diphosphite, tetrakis[2-t-butyl-4-thio(2'-methyl-4'-hydroxy-5'-t-butylphenyl)-5-methylphenyl]-1,10-decamethylene-di-carboxylic acid-di-hydroxyethylcarbonylhydrazide-diphosphite, tetrakis[2-t-butyl-4-thio(2'-methyl-4'-hydroxy-5'-t-butylphenyl)-5-methylphenyl]-1,10-decamethylene-di-carboxylic acid-di-salicyloylhydrazide-diphosphite, tetrakis[2-t-butyl-4-thio(2'-methyl-4'-hydroxy-5'-t-butylphenyl)-5-methylphenyl]-di(hydroxyethylcarbonyl)hydrazide-diphosphite and tetrakis[2-t-butyl-4-thio(2'-methyl-4'-hydroxy-5'-t-butylphenyl)-5-methylphenyl]-N,N'-bis(hydroxyethyl)oxamide-diphosphite. Those having at least one P-O bond linked to an aromatic group(s) are more preferred, and specific examples of such phosphite compounds include tris(2,4-di-t-butylphenyl)phosphite, tetrakis(2,4-di-t-butylphenyl)4,4'-biphenylenephosphonite, bis(2,4-di-t-butylphenyl)pentaerythritol-di-phosphite, bis(2,6-di-t-butyl-4-methylphenyl)pentaerythritol-di-phosphite, 2,2-methylenebis(4,6-di-t-butylphenyl)octylphosphite, 4,4'-butylidene-bis(3-methyl-6-t-butylphenyl-di-tridecyl)phosphite, 1,1,3-tris(2-methyl-4-ditridecylphosphite-5-t-butyl-phenyl)butane, tris(mixed mono- and di-nonylphenyl)phosphite, tris(nonylphenyl)phosphite and 4,4'-isopropylidenebis(phenyl-dialkylphosphite). Tris(2,4-di-t-butylphenyl)phosphite, 2,2-methylenebis(4,6-di-t-butylphenyl)octylphosphite, bis(2,6-di-t-butyl-4-methylphenyl)pentaerythritol-di-phosphite, tetrakis(2,4-di-t-butylphenyl)-4,4'-biphenylenephosphonite and the like may be preferably used. Specific examples of trade names of the phosphite compounds include "Adekastab" C, PEP-4C, PEP-8, PEP-11C, PEP-24G, PEP-36, HP-10, 2112, 260, 522A, 329A, 1178, 1500, C, 135A, 3010 and TPP manufactured by ADEKA Corporation; "Irgafos" 168 manufactured by Ciba Specialty Chemicals; "Sumilizer" P-16 manufactured by Sumitomo Chemical Co., Ltd.; "Sandostab" PEPQ manufactured by Clarinat International Ltd.; and "Weston" 618, 619G and 624 manufactured by GE.

Specific examples of the phosphate compounds include monostearyl acid phosphate, distearyl acid phosphate, methyl acid phosphate, isopropyl acid phosphate, butyl acid phosphate, octyl acid phosphate and isodecyl acid phosphate, and, among these, monostearyl acid phosphate and distearyl acid phosphate are preferred. Specific examples of trade names of the phosphate compounds include "Irganox" MD1024 manufactured by Ciba Specialty Chemicals; "Inhibitor" OABH manufactured by Eastman Kodak; and "Adekastab" CDA-1, CDA-6 and AX-71 manufactured by ADEKA Corporation.

The amount of the catalyst deactivating agent to be added is not restricted, and is preferably 0.001 to 2 parts by weight, more preferably 0.01 to 1 part by weight, still more preferably 0.05 to 0.5 part by weight, most preferably 0.08 to 0.3 part by weight with respect to 100 parts by weight of the polylactic acid block copolymer in view of the thermal stability.

In terms of the timing of addition of the catalyst deactivating agent, it is preferably added after the polylactic acid block copolymer was obtained, in view of maintaining a high molecular weight product. In cases where a polylactic acid block copolymer is obtained by producing polylactic acid by the ring-opening polymerization method or direct polymerization method followed by mixing and solid-phase polymerization of the resulting polylactic acid, a catalyst deactivating agent(s) may be added in the step of mixing polylactic acid in view of obtaining a polylactic acid block copolymer having a high melting point and a high molecular weight. In cases where a catalyst deactivating agent(s) is/are added when the polylactic acid is mixed, the catalyst deactivating agent(s) is/are preferably added before addition of the catalyst for solid-phase polymerization.

To the polylactic acid block copolymer of the present invention, one or more of normal additives such as fillers (glass fibers, carbon fibers, metal fibers, natural fibers, organic fibers, glass flakes, glass beads, ceramic fibers, ceramic beads, asbestos, wollastonite, talc, clay, mica, sericite, zeolite, bentonite, montmorillonite, synthetic mica, dolomite, kaolin, silicic acid fine powder, feldspar powder, potassium titanate, shirasu balloon, calcium carbonate, magnesium carbonate, barium sulfate, calcium oxide, aluminum oxide, titanium oxide, aluminum silicate, silicon oxide, plaster, novaculite, dawsonite, white clay and the like), ultraviolet absorbers (resorcinol, salicylate, benzotriazole, benzophenone and the like), heat stabilizers (hindered phenol, hydroquinone, phosphites and substituted bodies thereof, and the like), lubricants, releasing agents (montanic acid and salts thereof, esters thereof and half esters thereof, stearyl alcohol, stearamide, polyethylene wax and the like), coloring agents including dyes (nigrosine and the like) and pigments (cadmium sulfide, phthalocyanine and the like), color-protection agents (phosphites, hypophosphates and the like), flame retardants (red phosphorus, phosphoric acid esters, brominated polystyrene, brominated polyphenylene ether, brominated polycarbonate, magnesium hydroxide, melamine, cyanuric acid and salts thereof, silicon compounds and the like), conducting agents or coloring agents (carbon black and the like), sliding property improving agents (graphite, fluorine resins and the like), nuclear agents (inorganic nuclear agents including talc; organic amide compounds including ethylenebislauric acid amide, ethylenebis-12-dihydroxystearic acid amide and trimellitic acid tricyclohexylamide; pigment nucleating agents including copper phthalocyanine and Pigment Yellow 110; organic carboxylic acid metal salts; phenylphosphonic acid zinc; and the like) and antistatic agents may be added as long as the object of the present invention is not adversely affected.

The polylactic acid block copolymer obtained by the production method of the present invention may additionally comprise at least one of other thermoplastic resins (polyethylene, polypropylene, polystyrene, acrylic resins, acrylonitrile/butadiene/styrene copolymers, polyamide, polycarbonate, polyphenylene sulfide resins, polyether ether ketone resins, polyester, polysulfone, polyphenylene oxide, polyacetal, polyimide, polyetherimide, cellulose esters and the like), thermosetting resins (phenol resins, melamine resins, polyester resins, silicone resins, epoxy resins and the like), soft thermoplastic resins (ethylene/glycidyl methacrylate copolymers, polyester elastomers, polyamide elastomers, ethylene/propylene terpolymers, ethylene/butene-1 copolymers and the like) and the like as long as the object of the present invention is not adversely affected.

In cases where an acrylic resin is used in the present invention, preferred examples of the resin generally include acrylic resins containing as a major component (meta)alkyl acrylate units having a $C_1$-$C_4$ alkyl group(s). Further, the (meta)alkyl acrylate having a $C_1$-$C_4$ alkyl group(s) may be copolymerized with another alkyl acrylate having a $C_1$-$C_4$ alkyl group(s) or an aromatic vinyl compound such as styrene.

Examples of the (meta)alkyl acrylate having an alkyl group(s) include methyl acrylate, methyl methacrylate, ethyl acrylate, ethyl methacrylate, butyl acrylate, butyl methacrylate, cyclohexyl acrylate and cyclohexyl methacrylate. In cases where an acrylic resin is used in the present invention, polymethyl methacrylate composed of methyl methacrylate is especially preferred.

The polylactic acid block copolymer of the present invention has a property that easily allow formation of a polylactic acid stereocomplex having a high melting point even after heat melting and solidification upon processing of the block copolymer into a molded article.

(Molded Product)

The molded product comprising the polylactic acid block copolymer of the present invention is characterized in that it has a portion having a relative degree of crystallinity of not less than 90%, which portion also has a haze value of not more than 30% when the thickness of the molded product is 100 µm.

The relative degree of crystallinity herein can be calculated according to the Equation (11) below, wherein ΔHm represents the melting enthalpy of crystals in the molded product and ΔHc represents the crystallization enthalpy of crystals in the molded product upon temperature increase.

$$\text{Relative degree of crystallinity} = [(\Delta Hm - \Delta Hc)/\Delta Hm] \times 100 \qquad (11)$$

The relative degree of crystallinity is preferably not less than 90%, more preferably not less than 92%, especially preferably not less than 94%. ΔHc herein means the crystallization enthalpy of crystals in molded product as measured with differential scanning calorimeter (DSC) upon temperature increase at a heating rate of 20°C/min. ΔHm means the melting enthalpy of crystals in the molded product measured with DSC at a heating rate of 20°C/min., which the melting enthalpy of crystals as measured by increasing the temperature at a heating rate of 20°C/min. from 30°C to 250°C during the first temperature increase and then decreasing the temperature at a cooling rate of 20°C/min. to 30°C, further followed by increasing the temperature at a heating rate of 20°C/min. from 30°C to 250°C during the second temperature increase.

The haze value means a value obtained by measurement according to JIS K 7105 with a molded product having a thickness of 100 µm, and, in view of the transparency, the haze value is preferably not more than 30%, more preferably not more than 20%, especially preferably not more than 10%. The lower limit is not restricted, and the haze value is not less than 0%.

The molded product of the present invention preferably has a haze value of not more than 20% when the thickness is 250 to 750 µm. The haze value is more preferably not more than 10%, and especially preferably not more than 5% in view of the transparency. The lower limit is not restricted, and the haze value is not less than 0%.

Further, in the present invention, the molded product has a haze value of preferably not more than 30%, more preferably not more than 20%, still more preferably not more than 10%, still more preferably not more than 7%, especially preferably not more than 5% when the thickness is 0.75 to 1.25 mm. Further, in the present invention, even in cases where a nuclear agent to be used for improvement of the transparency is not contained, the molded product has a haze value of preferably not more than 30%, more preferably not more than 20%, especially preferably not more than 10%.

In the molded product comprising the polylactic acid block copolymer of the present invention, the polylactic acid block copolymer contained in the molded product preferably has a cooling crystallization temperature (Tc) of not less than 130°C in view of the heat resistance and the transparency. The cooling crystallization temperature (Tc) of the molded product herein means the crystallization temperature derived from polylactic acid crystals as measured with a differential scanning calorimetry (DSC) by increasing the temperature from 30°C to 250°C at a heating rate of 20°C/min. and then keeping the temperature constant at 250°C for 3 minutes, followed by decreasing the temperature at a cooling rate of 20°C/min. The crystallization temperature (Tc) is not restricted, and is preferably not less than 130°C, more preferably not less than 132°C, especially preferably not less than 135°C in view of the heat resistance and the transparency.

In the present invention, the polylactic acid block copolymer contained in the molded product has a degree of stereocomplexation (Sc) of preferably not less than 80%, more preferably 85 to 100%, especially preferably 90 to 100%. The degree of stereocomplexation herein means the ratio of stereocomplex crystals with respect to the total crystals in the polylactic acid. More particularly, it can be calculated according to the Equation (12) below, wherein ΔHl represents the heat of fusion of crystals of poly-L-lactic acid alone and crystals of poly-D-lactic acid alone and ΔHh represents the heat of fusion of stereocomplex crystals as measured with a differential scanning calorimetry (DSC).

$$Sc = \Delta Hh/(\Delta Hl + \Delta Hh) \times 100 \qquad (12)$$

In the present invention, the polylactic acid block copolymer contained in the molded product preferably has a total number of the segment(s) composed of L-lactic acid units and segment(s) composed of D-lactic acid units of not less than 3 per one molecule of the polylactic acid block copolymer in view of the fact that a polylactic acid block copolymer which is likely to form a polylactic acid stereocomplex having a high melting point can be obtained. The molecular weight per segment is preferably 2,000 to 50,000. The molecular weight per segment is more preferably 4,000 to 45,000, especially preferably 5,000 to 40,000 in view of the mechanical properties.

In the present invention, the polylactic acid block copolymer contained in the molded product preferably has an average sequence length of not less than 20. The average sequence length is more preferably not less than 25, especially preferably not less than 30 in view of the mechanical properties of the molded product. The average sequence length of the molded product can be calculated by $^{13}$C-NMR measurement according to the Equation (13) below, wherein (a) represents the integrated value of the peak at about 170.1 to 170.3 ppm among the peaks of carbon belonging to carbonyl carbon and (b) represents the integrated value of the peak at about 169.8 to 170.0 ppm.

$$\text{Average sequence length} = (a)/(b) \quad (13)$$

In the present invention, the weight average molecular weight of the polylactic acid block copolymer in the molded product is not restricted, and the weight average molecular weight is preferably not less than 90,000 and less than 300,000 in view of the mechanical properties. The weight average molecular weight is more preferably not less than 100,000 and less than 290,000, still more preferably not less than 120,000 and less than 280,000, especially preferably not less than 140,000 and less than 260,000 in view of the moldability and the mechanical properties. Further, in the present invention, the polydispersity of the polylactic acid block copolymer in the molded product is preferably within the range of 1.5 to 3.0 in view of the mechanical properties. The polydispersity is more preferably within the range of 1.8 to 2.7, especially preferably within the range of 2.0 to 2.4 in view of the moldability and the mechanical properties. The weight average molecular weight and the polydispersity are values which are measured by gel permeation chromatography (GPC) using hexafluoroisopropanol as a solvent and calculated in terms of poly(methyl methacrylate) standards.

In the present invention, the polylactic acid resin composition constituting the molded product is preferably a polylactic acid resin composition comprising at a ratio of not less than 60% the polylactic acid block copolymer constituted by a segment(s) composed of L-lactic acid units and segment(s) composed of D-lactic acid units. The ratio is more preferably not less than 70%, especially preferably not less than 80%.

In the present invention, each of the amount of lactide and the amount of oligomers contained in the polylactic acid block copolymer constituting the molded product is preferably not more than 5%. The amount is more preferably not more than 3%, especially preferably not more than 1%. The amount of lactic acid contained in the poly-L-lactic acid or poly-D-lactic acid is preferably not more than 2%. The amount is more preferably not more than 1%, especially preferably not more than 0.5%.

Examples of the method for producing a molded product comprising the polylactic acid block copolymer of the present invention include known molding methods such as injection molding, extrusion molding, blow forming, vacuum forming and press forming. In view of the transparency and the heat resistance, injection molding, blow forming, vacuum forming and press forming are preferred.

In cases where sheet forming is carried out as the method for producing a molded product in the present invention, examples of the method include a method in which a molten polylactic acid resin composition comprising the polylactic acid block copolymer is extruded through a die having a predetermined thickness to obtain a sheet, and a method in which a molten polylactic acid resin composition comprising the polylactic acid block copolymer is sandwiched between predetermined metal molds to obtain a sheet. Further, the obtained sheet may be subjected to heat treatment at a predetermined temperature for a predetermined length of time to increase the degree of crystallinity. Specific examples of the production method include a method in which melting at 240°C for 2 minutes is followed by pressing at a press metal mold temperature of 80°C to prepare a press sheet having a thickness of 100 $\mu$m, which is then subjected to heat treatment under a nitrogen atmosphere at 110°C for 30minutes, and a method in which melting under heat at 240°C for 2 minutes is followed by pressing at a press temperature of 40°C to prepare a press sheet having a thickness of 1 mm, which is then subjected to heat treatment under a nitrogen atmosphere at 80°C for 5 minutes and at 110°C for 30 minutes.

In cases where injection molding is carried out as the method for producing a molded product in the present invention, in view of the transparency and heat resistance, the mold temperature is preferably set within the temperature range from the glass-transition temperature to the melting point of the polylactic acid block copolymer, more preferably within the temperature range of 60°C to 220°C, still more preferably within the temperature range of 70°C to 200°C, still more preferably within the temperature range of 80°C to 180°C, and each molding cycle in the injection molding is preferably operated for not more than 150 seconds, more preferably not more than 90 seconds, still more preferably not more than 60 seconds, still more preferably not more than 50 seconds.

In cases where blow forming is carried out as the method for producing a molded product in the present invention, examples of the method include a method in which the polylactic acid block copolymer is molded by injection molding according to the above method into a closed-end tubular molded product (parison) having a degree of crystallinity that allows blow forming, and transferred to a metal mold for blow forming whose temperature was set within the range from the glass-transition temperature to the glass-transition temperature+80°C, preferably within the range from 60°C to 140°C, more preferably within the range from 70°C to 130°C, followed by stretching with a stretching rod while compressed air is supplied from an air nozzle, to obtain a molded product.

In cases where vacuum forming is carried out as the method for producing a molded product in the present invention, examples of the method include, in view of the transparency and heat resistance, a method in which a sheet or film having a degree of crystallinity that allows molding is once obtained and then heated with a heater such as a hot plate or hot air to 60°C to 150°C, preferably 65°C to 120°C, more preferably 70°C to 90°C, followed by bringing the sheet into close contact with a metal mold which was set to a mold temperature of 30 to 150°C, preferably 40°C to 100°C, more preferably 50°C to 90°C while the pressure inside the metal mold is reduced, to perform molding.

In cases where press forming is carried out as the method for producing a molded product in the present invention, examples of the method include a method in which a sheet or film having a degree of crystallinity that allows molding is once obtained and then heated with a heater such as a hot plate or hot air to 60°C to 150°C, preferably 65°C to 120°C, more preferably 70°C to 90°C, followed by bringing the sheet into close contact with a metal mold composed of a male mold and female mold which was set to a mold temperature of 30 to 150°C, preferably 40°C to 100°C, more preferably 50°C to 90°C, and pressurizing the sheet to perform mold clamping.

In the method for producing a polylactic acid block copolymer of the present invention, the molded product comprising the obtained polylactic acid block copolymer has transparency even in cases where stretching treatment was not carried out, so that it is not necessary to perform stretching treatment to give transparency to the product. However, it is also possible to perform stretching treatment as required. The shape of the molded product to be subjected to stretching treatment is preferably a film or a sheet. In cases where the stretching treatment is performed, stretching is preferably carried out within the range from the glass-transition temperature to the melting point of the polylactic acid stereocomplex, more preferably within the temperature range of 60°C to 170°C, still more preferably within the temperature range of 70°C to 150°C

The polylactic acid block copolymer and the molded product comprising the polylactic acid block copolymer of the present invention may be used as a film, sheet, fiber/cloth, non-woven fabric, injection-molded article, extrusion-molded article, vacuum pressure-molded article, blow-molded article, complex with another/other material(s), and the like, and are useful for uses such as agricultural materials, garden materials, fishery materials, civil engineering and construction materials, stationery, medical supplies, automobile parts, electrical/electronic components and optical films.

Specific examples of the uses include electrical/electronic components such as relay cases, coil bobbins, optical pickup chassis, motor cases, housings and internal parts for laptop computers, housings and internal parts for CRT displays, housings and internal parts for printers, housings and internal parts for mobile terminals including mobile phones, mobile computers and handheld-type mobiles, housings and internal parts for recording media (e.g., CD, DVD, PD and FDD) drives, housings and internal parts for copiers, housings and internal parts for facsimile devices, and parabolic antennas. Further examples of the uses include parts for home and office electric appliances such as VTR parts, television parts, iron parts, hair driers, rice cooker parts, microwave oven parts, acoustic parts, parts for video equipments including video cameras and projectors, substrates for optical recording media including Laser discs (registered trademark), compact discs (CDs), CD-ROM, CD-R, CD-RW, DVD-ROM, DVD-R, DVD-RW, DVD-RAM and Blu-ray disks, illumination parts, refrigerator parts, air conditioner parts, typewriter parts and word processor parts. The polylactic acid block copolymer and the molded product comprising the polylactic acid block copolymer of the present invention are also useful for, for example, housings and internal parts for electronic musical instruments, home game machines and portable game machines; electrical/electronic components such as various gears, various cases, sensors, LEP lamps, connectors, sockets, resistors, relay cases, switches, coil bobbins, condensers, cases for variable condensers, optical pickups, oscillators, various terminal blocks, transformers, plugs, printed circuit boards, tuners, speakers, microphones, headphones, small motors, magnetic head bases, power modules, semiconductors, liquid crystals, FDD carriages, FDD chassis, motor brush holders, transformer members and coil bobbins; building components such as sash rollers, blind curtain parts, pipe joints, curtain liners, blind parts, gas meter parts, water meter parts, water heater parts, roof panels, adiabatic walls, adjusters, plastic floor posts, ceiling hangers, stairs, doors and floors; fishery-related members such as bait bags; civil engineering-related members such as vegetation nets, vegetation mats, weed control bags, weed control nets, curing sheets, slope protection sheets, fly ash-preventing sheet, drain sheets, water retention sheets, sludge/slime dewatering bags and concrete molds; underhood parts for automobiles such as air flow meters, air pumps, thermostat housings, engine mounts, ignition bobbins, ignition cases, clutch bobbins, sensor housings, idle speed control bulbs, vacuum switching bulbs, ECU (Electric Control Unit) housings, vacuum pump cases, inhibitor switches, rotation sensors, acceleration sensors, distributor caps, coil bases, ABS actuator cases, the top and the bottom of radiator tanks, cooling fans, fan shrouds, engine covers, cylinder head covers, oil caps, oil pans, oil filters, fuel caps, fuel strainers, distributor caps, vapor canister housings, air cleaner housings, timing belt covers, brake booster parts, various cases, various tubes, various tanks, various hoses, various clips, various valves and various pipes; interior parts for automobiles such as torque control levers, safety belt parts, register blades, washer levers, window regulator handles, knobs for window regulator handles, passing light levers, sun visor brackets and various motor housings; exterior parts for automobiles such as roof rails, fenders, garnishes, bumpers, door mirror stays, spoilers, hood louvers, wheel covers, wheel caps, grill apron cover frames, lamp reflectors, lamp bezels and door handles; various automobile connectors such as wire harness connectors, SMJ connectors (connectors for trunk connection), PCB connectors (board connectors) and door grommet connectors; machine parts such as gears, screws, springs, bearings, levers, key stems, cams, ratchets, rollers, water-supply parts, toy parts, fans, fishing guts, pipes, washing jigs, motor parts, microscopes, binoculars, cameras and watches; agricultural members such as multi-films, tunnel films, bird-preventing sheets, pots for raising seedlings, vegetation piles, seeding strings/tapes, sheets for sprouting, inner sheets for greenhouses, stoppers for agricultural vinyl sheets, slow-releasing fertilizer, root barriers, gardening nets, insect-preventing nets, nets for young trees, print laminates, fertilizer bags, sample bags, sandbags, protection nets against mammalian pests, strands for training, and windshield nets; sanitary supplies; medical supplies such as medical films; packaging films for calendars, stationery, clothing and food; vessels and tableware such as trays, blisters, knives, forks, spoons, tubes, plastic cans, pouches, containers, tanks and baskets; containers and wrappings such as hot-fill containers, containers for microwave oven cooking, containers for cosmetics, wrapping films, foam buffers, paper laminates, shampoo bottles, beverage bottles, cups, candy wrappings, shrink labels, lid materials, windowed envelopes, baskets for fruits, tearable tapes, easy-peel wrappings, egg packs, HDD wrappings, compost bags, recording media wrappings, shopping bags, and wrapping films for electric and electronic parts; various types of clothing; interior goods; carrier tapes; print laminates; thermal stencil printing films; mold releasing films; porous films; container bags; credit cards; cash cards; ID cards; IC cards; optical elements; electroconductive embossed tapes; IC trays; golf tees; garbage bags; shopping bags; various nets; tooth brushes; stationery; plastic folders; bags; chairs; tables; cooler boxes; rakes; hose reels; planters; hose nozzles; surfaces of dining tables and desks; furniture panels; kitchen cabinets; pen caps; and gas lighters.

EXAMPLES

The present invention will now be described more specifically by way of Examples. The number of parts in Examples herein represents parts by weight. The methods of measurement of physical properties and the like were as follows. The measurement was carried out for the same selected sites of molded products.

(1) Molecular Weight

The weight average molecular weight, polydispersity and molecular weight distribution are values which are measured by gel permeation chromatography (GPC) and calculated in terms of poly(methyl methacrylate) standards. The GPC measurement was carried out using: as a detector, WATERS 410, which is a differential refractometer manufactured by WATERS; as a pump, MODEL 510 manufactured by WATERS; and, as a column, Shodex GPC HFIP-806M and Shodex GPC HFIP-LG which are linearly connected. In terms of the conditions for the measurement, the flow rate was 0.5 mL/min. In the measurement, hexafluoroisopropanol was used as a solvent, and 0.1 mL of a solution having a sample concentration of 1 mg/mL was injected.
In terms of the molecular weight distribution, the total area (c) and the area (d) corresponding to molecular weights of not less than 100,000 were calculated, and the ratio of molecular weights of not less than 100,000 (Mwp) was calculated according to the Equation (14) below.

$$Mwp = (d)/(c) \times 100 \quad (14)$$

(2) Average Sequence Length

In terms of the average sequence lengths of the polylactic acid block copolymer and the mixture of poly-L-lactic acid and poly-D-lactic acid, $^{13}$C-NMR measurement was carried out using an NMR apparatus AL-400 manufactured by Japan Electro Optical Laboratory, followed by calculation according to the Equation (15) below, wherein (a) represents the integrated value of the peak at about 170.1 to 170.3 ppm among the peaks of carbon belonging to carbonyl carbon and (b) represents the integrated value of the peak at about 169.8 to 170.0 ppm.

$$\text{Average sequence length} = (a)/(b) \quad (15)$$

Hydrogenated chloroform containing 10% hexafluoroisopropanol was used as a solvent in the measurement. A sample solution was prepared by dissolving 50 mg of the sample in 0.7 ml of the solvent, and the resulting solution was subjected to the measurement at a measurement temperature of 27°C and a measurement frequency of 125 MHz.

(3) Thermal Properties

The melting point, the end of melting point and the amount of heat due to melting were measured with a differential scanning calorimetry (DSC) manufactured by Perkin-Elmer Corp. In terms of the measurement conditions, measurement was carried out with 5 mg of the sample under a nitrogen atmosphere at a heating rate of 20°C/min.

The melting point herein means the temperature at the peak top of the peak due to melting of crystals, and the end of melting point means the temperature at the end of the peak due to melting of crystals. In the obtained results, a melting point of not less than 190°C and less than 250°C was judged to be due to formation of a polylactic acid stereocomplex, and a melting point of not less than 150°C and less than 190°C was judged to be due to nonoccurrence of formation of a polylactic acid stereocomplex. The melting point of the mixture herein means the melting point measured by increasing the temperature at a heating rate of 20°C/min. from 30°C to 250°C in the first temperature increase, and the melting point of the polylactic acid block copolymer after solid-phase polymerization means the melting point measured by increasing the temperature at a heating rate of 20°C/min. from 30°C to 250°C during the first temperature increase and then decreasing the temperature at a cooling rate of 20°C/min. to 30°C, further followed by increasing the temperature at a heating rate of 20°C/min. from 30°C to 250°C during the second temperature increase.

The parameter value represented by the Formula (16) below was calculated as thermal properties.

$$(Tm-Tms)/(Tme-Tm) \quad (16)$$

In the parameter of Formula (16), Tm represents the melting point derived from stereocomplex crystals of the polylactic acid block copolymer or the mixture of poly-L-lactic acid and poly-D-lactic acid (peak top temperature in the peak due to melting of crystals); Tms represents the beginning temperature of melting of stereocomplex crystals of the polylactic acid block copolymer or the mixture of poly-L-lactic acid and poly-D-lactic acid; and Tme represents the end temperature of melting of the polylactic acid block copolymer or the mixture of poly-L-lactic acid and poly-D-lactic acid. Each value was measured with a differential scanning calorimetry (DSC) manufactured by Perkin-Elmer Corp. for 5 mg of the sample under a nitrogen atmosphere. The measured value was obtained by increasing the temperature at a heating rate of 40°C/min. from 30°C to 250°C during the first temperature increase and then decreasing the temperature at a cooling rate of 40°C/min. to 30°C, further followed by increasing the temperature at a heating rate of 40°C/min. from 30°C to 250°C during the second temperature increase.

(4) Degree of Stereocomplexation (Sc)

The degrees of stereocomplexation (Sc) of the polylactic acid block copolymer and polylactic acid stereocomplex (mixture of poly-L-lactic acid and poly-D-lactic acid) were calculated according to the Equation (17) below:

$$Sc=\Delta Hh/(\Delta Hl+\Delta Hh)\times 100 \quad (17)$$

(wherein $\Delta Hl$ represents the heat of fusion of crystals of poly-L-lactic acid alone and crystals of poly-D-lactic acid alone, which appears at not less than 150°C and less than 190°C, and $\Delta Hh$ represents the heat of fusion of stereocomplex crystals, which appears at not less than 190°C and less than 250°C).

The degree of stereocomplexation in the mixture was calculated for the peak due to melting of crystals measured with a differential scanning calorimetry (DSC) during the first temperature increase, and the degree of stereocomplexation of the polylactic acid block copolymer after solid-phase polymerization was calculated for the peak due to melting of crystals measured by increasing the temperature at a heating rate of 20°C/min. from 30°C to 250°C during the first temperature increase and then decreasing the temperature at a cooling rate of 20°C/min. to 30°C, further followed by increasing the temperature at a heating rate of 20°C/min. from 30°C to 250°C during the second temperature increase.

(5) Yield

The yield (Y) of the polylactic acid block copolymer after solid-phase polymerization was calculated according to the Equation (18) below:

$$Y=Ws/Wp\times 100 \quad (18)$$

(wherein Wp represents the weight of the mixture before solid-phase polymerization, and Ws represents the weight of the polylactic acid block copolymer after solid-phase polymerization).

(6) Cooling Crystallization Temperature

The cooling crystallization temperatures of the polylactic acid block copolymer and the polylactic acid stereocomplex (mixture of poly-L-lactic acid and poly-D-lactic acid) were measured with a differential scanning calorimetry (DSC) manufactured by Perkin-Elmer Corp. More specifically, the temperature of 5 mg of each sample was increased with a differential scanning calorimetry (DSC) under a nitrogen atmosphere at a heating rate of 20°C/min from 30°C to 250°C, and the temperature was then kept constant at 250°C for 3 minutes, followed by decreasing the temperature at a cooling rate of 20°C/min. while measuring the temperature at the crystallization peak top to obtain the cooling crystallization temperature.

(7) Relative Degree of Crystallinity

In terms of the relative degrees of crystallinity of the polylactic acid block copolymer and the polylactic acid stereocomplex (mixture of poly-L-lactic acid and poly-D-lactic acid), ΔHm, which represents the melting enthalpy of crystals in the molded product, and ΔHc, which represents the crystallization enthalpy of crystals in the molded product upon temperature increase, were measured with differential scanning calorimeter (DSC) manufactured by Perkin-Elmer Corp., and calculation was carried out according to the Equation (19) below:

$$\text{Relative degree of crystallinity} = [(\Delta Hm - \Delta Hc)/\Delta Hm] \times 100 \quad (19)$$

(8) Haze Value

As an index of transparency of the molded product, the haze value was measured. A sheet-shaped molded product having a thickness of 0.1 mm was subjected to measurement of the haze value using a haze meter NDH-300A manufactured by Nippon Denshoku Industries, according to JIS K 7105.

(9) Storage Modulus

As an index of heat resistance of the molded product, the storage modulus was measured. The central portion of a sheet-shaped molded product having a thickness of 0.1 mm was cut into a piece having a size of 40 mm × 2 mm to provide a strip-shaped sample, and the sample was subjected to measurement of the dynamic viscoelasticity using a Dynamic viscoelasticity apparatus (DMS6100 manufactured by Seiko Instruments Inc.) under a nitrogen atmosphere at a heating rate of 2°C/min. at a frequency of 3.5 Hz, to measure the storage modulus at 130°C. It can be said that the higher the modulus, the higher the heat resistance.

(10) Tensile Strength

The central portion of a sheet-shaped molded product having a thickness of 0.1 mm was cut into a piece having a size of 40 mm × 2 mm to provide a strip-shaped sample, and the sample was subjected to measurement of the tensile strength according to ASTM D882.

(11) Impact Resistance

In a container obtained by vacuum forming of a sheet-shaped molded product having a thickness of 0.1 mm, water was placed, and the lid of the container was closed. The container was then dropped onto concrete from a height of 2 m with its bottom facing downward. The number of times of this operation was counted until the container was broken due to the drop impact to cause leakage of water, and evaluation was carried out by the method described below:
A: The number of times of dropping counted until the container was broken to cause leakage of water was not less than 5;
B: The number of times of dropping counted until the container was broken to cause leakage of water was 2 to 4; and
F: The number of times of dropping counted until the container was broken to cause leakage of water was 1.

[Reference Example 1]

In a reaction vessel equipped with an agitator and a reflux condenser, 50 parts of 90% aqueous L-lactic acid solution was placed, and the temperature was adjusted to 150°C, followed by allowing the reaction to proceed while gradually decreasing the pressure to evaporate water for 3.5 hours. Thereafter, the pressure was adjusted to normal pressure under a nitrogen atmosphere, and 0.02 part of stannous acetate was added, followed by allowing polymerization reaction to proceed while gradually decreasing the pressure to 13 Pa at 170°C for 7 hours, to obtain poly-L-lactic acid (PLA1). The weight average molecular weight of PLA1 was 18,000; the polydispersity was 1.5; the melting point was 149°C; and the end of melting point was 163°C.

[Reference Example 2]

PLA1 obtained in Reference Example 1 was subjected to crystallization treatment under a nitrogen atmosphere at 110°C for 1 hour, and then to solid-phase polymerization under a pressure of 60 Pa at 140°C for 3 hours, at 150°C for 3 hours and then at 160°C for 5 hours, to obtain poly-L-lactic acid (PLA2). The weight average molecular weight of PLA2 was 43,000; the polydispersity was 1.8; the melting point was 159°C; and the end of melting point was 176°C.

[Reference Example 3]

PLA1 obtained in Reference Example 1 was subjected to crystallization treatment under a nitrogen atmosphere at 110°C for 1 hour, and then to solid-phase e polymerization under a pressure of 60 Pa at 140°C for 3 hours, at 150°C for 3 hours and then at 160°C for 12 hours, to obtain poly-L-lactic acid (PLA3). The weight average molecular weight of PLA3 was 137,000; the polydispersity was 1.8; the melting point was 168°C; and the end of melting point was 189°C.

[Reference Example 4]

PLA1 obtained in Reference Example 1 was subjected to crystallization treatment under a nitrogen atmosphere at 110°C for 1 hour, and then to solid-phase polymerization under a pressure of 60 Pa at 140°C for 3 hours, at 150°C for 3 hours and then at 160°C for 18 hours, to obtain poly-L-lactic acid (PLA4). The weight average molecular weight of PLA4 was 203,000; the polydispersity was 1.9; the melting point was 170°C; and the end of melting point was 189°C.

[Reference Example 5]

In a reaction vessel equipped with an agitator, 50 parts of L-lactide was placed and uniformly melted under a nitrogen atmosphere at 120°C, followed by changing the temperature to 150°C and adding 0.003 part of stannous octoate. The reaction was allowed to proceed for 2 hours to obtain poly-L-lactic acid (PLA5). The weight average molecular weight of PLA5 was 262,000; the polydispersity was 2.1; the melting point was 171°C; and the end of melting point was 191°C.

[Reference Example 6]

Water was distilled from 1 kg of 90 wt% aqueous L-lactic acid solution by stirring the solution at 150°C at 4,000 Pa for 6 hours, to achieve oligomerization. To this oligomer, 0.2 g of tin(II) chloride and 0.2 g of p-toluenesulfonic acid were added, and melt polymerization was carried out at 180°C at 1,300 Pa for 6 hours, to obtain a poly-L-lactic acid prepolymer. This prepolymer solid was pulverized and subjected to solid-phase polymerization at 140°C for 30 hours, to obtain poly-L-lactic acid (PLA6). The weight average molecular weight of PLA6 was 154,000; the polydispersity was 2.6; the melting point was 172°C; and the end of melting point was 194°C.

[Reference Example 7]

In a reaction vessel equipped with an agitator and a reflux condenser, 50 parts of 90% aqueous D-lactic acid solution was placed, and the temperature was adjusted to 150°C, followed by allowing the reaction to proceed while gradually decreasing the pressure to evaporate water for 3.5 hours. Thereafter, the pressure was adjusted to normal pressure under a nitrogen atmosphere, and 0.02 part of stannous acetate was added, followed by allowing polymerization reaction to proceed while gradually decreasing the pressure to 13 Pa at 170°C for 7 hours, to obtain poly-D-lactic acid (PDA1). The weight average molecular weight of PDA1 was 15,000; the polydispersity was 1.5; the melting point was 147°C; and the end of melting point was 163°C.

[Reference Example 8]

PDA1 obtained in Reference Example 7 was subjected to crystallization treatment under a nitrogen atmosphere at 110°C for 1 hour, and then to solid-phase polymerization under a pressure of 60 Pa at 140°C for 3 hours, at 150°C for 3 hours and then at 160°C for 3 hours, to obtain poly-D-lactic acid (PDA2). The weight average molecular weight of PDA2 was 29,000; the polydispersity was 1.6; the melting point was 150°C; and the end of melting point was 168°C.

[Reference Example 9]

PDA1 obtained in Reference Example 7 was subjected to crystallization treatment under a nitrogen atmosphere at 110°C for 1 hour, and then to solid-phase polymerization under a pressure of 60 Pa at 140°C for 3 hours, at 150°C for 3 hours and then at 160°C for 6 hours, to obtain poly-D-lactic acid (PDA3). The weight average molecular weight of PDA3 was 42,000; the polydispersity was 1.6; the melting point was 158°C; and the end of melting point was 176°C.

[Reference Example 10]

PDA1 obtained in Reference Example 7 was subjected to crystallization treatment under a nitrogen atmosphere at 110°C for 1 hour, and then to solid-phase polymerization under a pressure of 60 Pa at 140°C for 3 hours, at 150°C for 3 hours and then at 160°C for 18 hours, to obtain poly-D-lactic acid (PDA4). The weight average molecular weight of PDA4 was 198,000; the polydispersity was 2.0; the melting point was 170°C; and the end of melting point was 191°C.

[Reference Example 11]

Water was distilled from 1 kg of 90 wt% aqueous D-lactic acid solution by stirring the solution at 150°C at 4,000 Pa for 6 hours, to achieve oligomerization. To this oligomer, 0.2 g of tin(II) chloride and 0.2 g of p-toluenesulfonic acid were added, and melt polymerization was carried out at 180°C at 1,300 Pa for 3 hours, to obtain poly-D-lactic acid (PDA5). The weight average molecular weight of PDA5 was 16,000; the polydispersity was 1.5; the melting point was 144°C; and the end of melting point was 160°C.

(Examples 1 to 7, Comparative Examples 1 to 5)

(1) Mixtures of Poly-L-lactic Acid and Poly-D-lactic Acid

Poly-L-lactic acid and poly-D-lactic acid were mixed using a twin screw extruder Type TEX30 (L/D=45.5) manufactured by The Japan Steel Works, LTD.
Before being mixed, poly-L-lactic acid and poly-D-lactic acid were preliminarily subjected to crystallization treatment under a nitrogen atmosphere at a temperature of 110°C for 2 hours, and, when poly-L-lactic acid and poly-D-lactic acid were supplied to the twin screw extruder, the poly-L-lactic acid or the poly-D-lactic acid having a higher molecular weight was fed from the resin hopper and the other having a lower molecular weight was fed from the side resin hopper provided at the position of L/D=30. In the twin screw extruder, a plasticization part set to a temperature of 180°C was provided at the position of L/D=10 from the resin hopper, and a kneading disk was provided at the portion of L/D=30 to provide a screw that allows shearing. This structure enables mixing under shearing, and poly-L-lactic acid and poly-D-lactic acid were mixed at a mixing temperature of 200°C under shearing. The combinations of poly-L-lactic acid and poly-D-lactic acid for the mixing were as shown in Table 1. The polymers after mixing were subjected to crystallization treatment at a pressure of 13.3 Pa at 110°C for 2 hours, and their physical properties were measured.
Based on the results shown in Table 1, the weight average molecular weight of the mixture was as high as not less than 100,000 in Examples 1 to 7 and Comparative Example 5, while the weight average molecular weight upon mixing was as low as less than 100,000 in Comparative Examples 1 to 4. In terms of the thermal properties of the mixtures, an increases in the melting point of the mixture was observed under the conditions in all of Examples 1 to 7 and Comparative Examples 1 to 5. The degree of stereocomplexation was as high as not less than 60% in Examples 1 to 7 and Comparative Examples 1 to 4, but the degree of stereocomplexation was low in Comparative Example 5, wherein a combination of poly-L-lactic acid and poly-D-lactic acid each having a molecular weight of not less than 100,000 was mixed.

(2) Polylactic Acid Block Copolymers

Each mixture obtained in (1) was subjected to solid-phase polymerization. More specifically, solid-phase polymerization was carried out in a vacuum drier at 140°C under a pressure of 13.3 Pa for 4 hours. Subsequently, the temperature was increased to 150°C and solid-phase polymerization was carried out for 4 hours, and the temperature was then further increased to 160°C and solid-phase polymerization was carried out for 10 hours. By this, a polylactic acid block copolymer having more than 3 segments was obtained.

As shown in Table 1, the weight average molecular weight increased to not less than 100,000 after solid-phase polymerization in any of Examples 1 to 7 and Comparative Example 5. Further, the ratio of molecular weights of not less than 100,000 in the molecular weight distribution curve was not less than 50% in any of these cases. Since the polydispersity after solid-phase polymerization was lower than the polydispersity upon mixing and less than 3.0, it could be confirmed that the polymerization proceeded and polylactic acid block copolymer was obtained. In contrast, in Comparative Examples 1 to 4, the weight average molecular weight after solid-phase polymerization was not more than 100,000, and the ratio of molecular weights of not less than 100,000 in the molecular weight distribution curve was less than 40%. Further, the average sequence length of the polymer observed after solid-phase polymerization was as high as not less than 30 in Examples 1 to 7 and Comparative Examples 5 and 6. The yield after solid-phase polymerization was as high as not less than 90% in any of Examples 1 to 7 and Comparative Examples 1 to 3 and 5 wherein high molecular weight segments were used as the polylactic acid to be mixed, but the yield after solid-phase polymerization was as low as less than 90% in Comparative Example 4 wherein a combination of poly-L-lactic acid and poly-D-lactic acid having molecular weights of as low as not more than 100,000 was used in the mixing. In terms of the thermal properties after solid-phase polymerization, an increase in the melting point of the mixture was observed under the conditions in all of Examples 1 to 7 and Comparative Examples 1 to 5. Examples 1 to 7 and Comparative Examples 1 to 4 showed degrees of stereocomplexation of as high as not less than 80%, which indicate high heat resistance, but Comparative Example 5 showed a low degree of stereocomplexation, which indicates poor heat resistance. In terms of the parameter of thermal properties (Tm-Tms)/(Tme-Tm), Examples 1 to 7 showed parameter values of less than 1.8, while Comparative Examples 1 to 7 showed parameter values of not less than 1.9. Based on these results, it could be confirmed that the parameter of thermal properties is less than 1.8 only in the cases of polylactic acid block copolymers shown in Examples having both high molecular weights and high heat resistance. In terms of the cooling crystallization temperature, Examples 1 to 7 and Comparative Example 4 showed values of not less than 130°C, which indicate excellent crystallization properties, while Comparative Examples 1 to 3 and 5 showed values of less than 130°C, which indicate poor crystallization properties.

(Comparative Example 6)

(1) Mixture of Poly-L-lactic Acid and Poly-D-lactic Acid

In a 200-cc flask, 30 g of PLA6 and 30 g of PDA5 were blended at normal pressure under heat, and the temperature was increased from room temperature to 190°C for 10 minutes. In the heating process, partial melting was observed at 160°C. Thereafter, the temperature was decreased to obtain a mixture.

As shown by the results in Table 1, the weight average molecular weight upon mixing was 84,000. In terms of the thermal properties upon mixing, an increase in the melting point due to stereocomplex formation was partially observed. However, since blending in the mixing step was carried out at a temperature of not more than the end of melting point of PLA6, the polymer only partially melted and crystals of the polylactic acid alone remained, resulting in a degree of stereocomplexation of as low as 26%.

(2) Polylactic Acid Block Copolymer

The mixture obtained in (1) was subjected to heat treatment under a pressure of 66.6 Pa at 110°C for 2 hours, and then heated at 130°C for 5 hours and at 140°C for 25 hours (30 hours in total) to perform solid-phase polymerization, thereby preparing a polylactic acid block copolymer having not less than 3 segments.

As shown in Table 1, the molecular weight was 151,000 and the average sequence length was 52 after solid-phase polymerization, but the yield after solid-phase polymerization was as low as not more than 90%. Further, the polydispersity was as large as 2.9 and the ratio of molecular weights of not less than 100,000 was as low as 36% after solid-phase polymerization, so that it could be confirmed that the polymer contained a large amount of low molecular weight components. In terms of the thermal properties after solid-phase polymerization, an increase in the melting point due to stereocomplex formation was observed, and the degree of stereocomplexation was high. On the other hand, the parameter of thermal properties (Tm-Tms)/(Tme-Tm) was 2.0, which was higher than the parameter values for the polylactic acid block copolymers in Examples having low polydispersities after solid-phase polymerization. Further, the cooling crystallization temperature after solid-phase polymerization was 124°C, which was lower than the values of not less than 130°C shown in Examples.

Subsequently, the mixtures obtained in Examples 1 and 2 and Comparative Example 6 (SC1, SC2 and SC13) and polymers obtained by solid-phase polymerization of these three kinds of mixtures (SB1, SB2 and SB13) were subjected to measurement of variation of the crystallization properties. That is, when the degrees of stereocomplexation of 20 pellets were compared, Examples 1 and 2 showed differences of not more than 5%, while Comparative Example 6 showed a difference of 15%.

(Comparative Example 7)

(1) Mixture of Poly-L-lactic Acid and Poly-D-lactic Acid

Poly-L-lactic acid and poly-D-lactic acid were mixed in the same manner as in Example 1.

Subsequently, a glass container was tightly filled with the mixture of poly-L-lactic acid and poly-D-lactic acid and the container was tightly closed, followed by heating the container. The heating temperature and time were the same as in Example 1.

Simply heating the mixture did not allow solid-phase polymerization to proceed, and the weight average molecular weight of the SB 14 sample after heating was 81,000, which was lower than in Example 1. The yield of this SB14 sample was 98%; Mwp was 48%; the polydispersity was 2.7; and the average sequence length was 21 and lower than in Example 1 wherein solid-phase polymerization was carried out under reduced pressure.

The melting point was 162°C/215°C and an increase in the melting point due to stereocomplex formation (Sc, 95%) was observed, but the parameter of thermal properties (Tm-Tms)/(Tme-Tm) was 2.2, which was larger than the value for the polylactic acid block copolymer in Example 1. The cooling crystallization temperature was 112°C, which was lower than in Example 1 wherein solid-phase polymerization was carried out under reduced pressure.

[Table 1]

| | Raw material | Mixture of poly-L-lactic acid & poly-D-lactic acid | | | | | | | Polymer after solid-phase polymerization (poly lactic acid block copolymer) | | | | | | | | | |
|---|---|---|---|---|---|---|---|---|---|---|---|---|---|---|---|---|---|---|
| | PLLA, PDLA (Mw×10⁴) | Mixture | Mixing composition ratio of L/D wt/wt | L/D molecular weight ratio | Mw×10⁴ | Polydispersity | Melting point of mixture (°C) | Sc (%) | Polymer | Mw×10⁴ | Mwp (%) | Polydispersity | Yield (%) | Average sequence length | Melting point after solid-phase polymerization (°C) | (Tm-Tms) / (Tme-Tm) | Sc (%) | Cooling crystallization temperature (°C) |
| Example 1 | PLA4 (20.3) PDA2 (2.9) | SC1 | 50/50 | 7.0 | 11.0 | 3.2 | 161/216 | 98 | SB1 | 12.5 | 55 | 2.6 | 97 | 38 | 219 | 1.4 | 100 | 137 |
| Example 2 | PLA4 (20.3) PDA2 (2.9) | SC2 | 70/30 | 7.0 | 13.7 | 3.0 | 162/214 | 75 | SB2 | 15.8 | 65 | 2.0 | 95 | 47 | 171/221 | 1.2 | 94 | 133 |
| Example 3 | PLA5 (26.2) PDA1 (1.5) | SC3 | 50/50 | 17.7 | 12.3 | 3.5 | 213 | 100 | SB3 | 13.3 | 58 | 2.7 | 96 | 42 | 212 | 1.3 | 100 | 139 |
| Example 4 | PLA5 (26.2) PDA1 (1.5) | SC4 | 70/30 | 17.7 | 15.8 | 3.2 | 157/216 | 86 | SB4 | 16.9 | 68 | 2.1 | 96 | 50 | 170/222 | 1.2 | 96 | 135 |
| Example 5 | PLA1 (1.8) PDA4 (19.8) | SC5 | 50/50 | 11.0 | 11.1 | 3.3 | 211 | 100 | SB5 | 13.0 | 52 | 2.9 | 95 | 31 | 214 | 1.5 | 100 | 136 |
| Example 6 | PLA1 (1.8) PDA4 (19.8) | SC6 | 30/70 | 11.0 | 13.1 | 2.8 | 162/213 | 78 | SB6 | 15.5 | 63 | 2.3 | 92 | 39 | 169/223 | 1.4 | 94 | 131 |

| | Raw material | Mixture of poly-L-lactic acid & poly-D-lactic acid | | | | | | Polymer after solid-phase polymerization (poly lactic acid block copolymer) | | | | | | | | | |
|---|---|---|---|---|---|---|---|---|---|---|---|---|---|---|---|---|---|
| | PLLA, PDLA (Mw×10⁴) | Mixture | Mixing composition ratio of L/D wt/wt | L/D molecular weight ratio | Mw× 10⁴ | Polydispersity | Melting point of mixture (°C) | Sc (%) | Polymer | Mw× 10⁴ | Mwp (%) | Polydispersity | Yield (%) | Average sequence length | Melting point after solid-phase polymerization (°C) | (Tm-Tms) / (Tme-Tm) | Sc (%) | Cooling crystallization temperature (°C) |
| Example 7 | PLA3 (13.7) PDA3 (4.2) | SC7 | 70/30 | 3.3 | 10.3 | 2.3 | 161/212 | 79 | SB7 | 13.6 | 50 | 2.0 | 94 | 36 | 170/211 | 1.6 | 89 | 134 |
| Comparative Example 1 | PLA4 (20.3) PDA2 (2.9) | SC8 | 30/70 | 7.0 | 7.2 | 3.3 | 159/213 | 81 | SB8 | 8.3 | 32 | 2A | 92 | 25 | 170/214 | 1.9 | 96 | 115 |
| Comparative Example 2 | PLA5 (26.2) PDA1 (1.5) | SC9 | 30/70 | 17.7 | 6.9 | 3.6 | 155/214 | 89 | SB9 | 7.2 | 37 | 2.6 | 91 | 27 | 169/210 | 2.2 | 95 | 122 |
| Comparative Example 3 | PLA1 (1.8) PDA4 (19.8) | SC10 | 70/30 | 11.0 | 6.5 | 2.9 | 163/212 | 83 | SB10 | 7.7 | 33 | 2.5 | 93 | 16 | 170/211 | 2.0 | 96 | 120 |
| Comparative Example 4 | PLA2 (4.3) PDA3 (4.2) | SC11 | 50/50 | 1.0 | 4.0 | 2.2 | 210 | 100 | SB11 | 4.2 | 28 | 2.1 | 78 | 14 | 209 | 2.1 | 100 | 134 |
| Comparative Example 5 | PLA5 (26.2) POA4 (19.8) | SC12 | 50/50 | 1.3 | 19.2 | 2.3 | 170/208 | 45 | SB12 | 18.2 | 71 | 2.2 | 93 | 60 | 169/208 | 2.4 | 40 | 105 |

EP 2 612 878 B1

(continued)

| | Raw material | Mixture of poly-L-lactic acid & poly-D-lactic acid | | | | | | | Polymer after solid-phase polymerization (poly lactic acid block copolymer) | | | | | | | | | |
|---|---|---|---|---|---|---|---|---|---|---|---|---|---|---|---|---|---|---|
| | PLLA, PDLA (Mw$\times 10^4$) | Mixture | Mixing composition ratio of L/D wt/wt | L/D molecular weight ratio | Mw$\times 10^4$ | Polydipersity | Melting point of mixture (°C) | Sc (%) | Polymer | Mw$\times 10^4$ | Mwp (%) | Polydipersity | Yield (%) | Average sequence length | Melting point after solid-phase polymerization (°C) | (Tm-Tms) / (Tme-Tm) | Sc (%) | Cooling crystallization temperature (°C) |
| Comparative Example 6 | PLA6 (15.4) | SC13 | 50/50 | 9.6 | 8.4 | 3.3 | 155/208 | 26 | SB13 | 15.1 | 36 | 2.9 | 76 | 52 | 171/213 | 2.0 | 93 | 124 |
| | PDA5 (1.6) | | | | | | | | | | | | | | | | | |
| Comparative Example 7 | PLA4 (20.3) | SC1 | 50/50 | 7.0 | 11.0 | 3.2 | 161/216 | 98 | - | - | - | - | - | - | - | - | - | - |
| | PDA2 (2.9) | | | | | | | | | | | | | | | | | |

[Reference Example 12]

In a reaction vessel equipped with an agitator, 100 parts of L-lactide and 0.05 part of ethylene glycol were uniformly melted under a nitrogen atmosphere at 150°C. Thereafter, 0.003 part of stannous octoate was added and polymerization reaction was performed for 3 hours. After the polymerization reaction, the reaction product was dissolved in chloroform, and monomers were completely removed by allowing precipitation with stirring in methanol (5 times the amount of chloroform), to obtain poly-L-lactic acid (PLA7). The weight average molecular weight of PLA7 was 201,000; the polydispersity was 1.7; the melting point was 173°C; and the end of melting point was 190°C.

[Reference Example 13]

In a reaction vessel equipped with an agitator, 100 parts of L-lactide and 0.1 part of ethylene glycol were uniformly melted under a nitrogen atmosphere at 150°C. Thereafter, 0.003 part by weight of stannous octoate was added and polymerization reaction was performed for 3 hours. Subsequently, 0.01 part of a phosphorus catalyst deactivating agent was added to the reaction system and the resulting mixture was stirred for 10 minutes to perform catalyst deactivation. The obtained reaction product was dissolved in chloroform, and monomers were completely removed by allowing precipitation with stirring in methanol (5 times the amount of chloroform), to obtain poly-L-lactic acid (PLA8). The weight average molecular weight of PLA8 was 122,000; the polydispersity was 1.7; the melting point was 170°C; and the end of melting point was 188°C.

[Reference Example 14]

In a reaction vessel equipped with an agitator, 100 parts of D-lactide was uniformly melted under a nitrogen atmosphere at 160°C. Thereafter, 0.003 part of stannous octoate was added and polymerization reaction was performed for 6 hours. After the polymerization reaction, the reaction product was dissolved in chloroform, and monomers were completely removed by allowing precipitation with stirring in methanol (5 times the amount of chloroform), to obtain poly-D-lactic acid (PDA6). The weight average molecular weight of PDA6 was 1,300,000; the polydispersity was 1.6; the melting point was 180°C; and the end of melting point was 194°C.

[Reference Example 15]

In a reaction vessel equipped with an agitator, 100 parts of D-lactide and 0.05 part of ethylene glycol were uniformly melted under a nitrogen atmosphere at 150°C. Thereafter, 0.003 part of stannous octoate was added and polymerization reaction was performed for 3 hours. After the polymerization reaction, the reaction product was dissolved in chloroform, and monomers were completely removed by allowing precipitation with stirring in methanol (5 times the amount of chloroform), to obtain poly-D-lactic acid (PDA7). The weight average molecular weight of PDA7 was 198,000; the polydispersity was 1.7; the melting point was 172°C; and the end of melting point was 190°C.

[Reference Example 16]

In a reaction vessel equipped with an agitator, 100 parts of D-lactide and 0.1 part of ethylene glycol were uniformly melted under a nitrogen atmosphere at 150°C. Thereafter, 0.003 part of stannous octoate was added and polymerization reaction was performed for 3 hours. Subsequently, 0.01 part of a phosphorus catalyst deactivating agent was added to the reaction system and the resulting mixture was stirred for 10 minutes, to perform catalyst deactivation. The obtained reaction product was dissolved in chloroform, and monomers were completely removed by allowing precipitation with stirring in methanol (5 times the amount of chloroform), to obtain poly-D-lactic acid (PDA8). The weight average molecular weight of PDA8 was 120,000; the polydispersity was 1.7; the melting point was 169°C; and the end of melting point was 188°C.

(Comparative Examples 8, 9, 11 and 12)

(1) Mixtures of Poly-L-lactic Acid and Poly-D-lactic Acid

Poly-L-lactic acid and poly-D-lactic acid were mixed using a batch-type twin screw extruder (Labo Plastomill) manufactured by Toyo Seiki Co., Ltd. to obtain mixtures of poly-L-lactic acid and poly-D-lactic acid. The test conditions were as follows: kneading temperature, 245°C; kneading rotation speed, 120 rpm; kneading time, 10 minutes (Comparative Examples 8 and 11) or 60 minutes (Comparative Examples 9 and 12). The combinations of poly-L-lactic acid and poly-D-lactic acid were as shown in Table 2.

The weight average molecular weight of the mixture of poly-L-lactic acid and poly-D-lactic acid was as high as not less than 100,000 in Comparative Examples 8 and 11, but was not more than 100,000 and tended to be low in Comparative Examples 9 and 12 wherein the kneading time was as long as 60 minutes. The total number of the segment(s) composed of L-lactic acid units and segment(s) composed of D-lactic acid units contained per one molecule of the mixture of poly-L-lactic acid and poly-D-lactic acid was 1. On the other hand, the melting point of the mixture of poly-L-lactic acid and poly-D-lactic acid was not less than 200°C due to stereocomplex formation in all cases, but the degree of stereocomplexation in both Comparative Examples 8 and 11 was not more than 60%, which was lower than in Examples 1 to 8. The parameter of thermal properties (Tm-Tms)/(Tme-Tm) was not less than 2.0 in all cases and higher than in Examples. The cooling crystallization temperature was observed at 105°C and 125°C in Comparative Examples 9 and 12, respectively, wherein the kneading time was long, while the cooling crystallization temperature could not be observed in Comparative Examples 8 and 11 and both samples had low crystallization properties.

(Comparative Examples 10 and 13)

(1) Mixtures of Poly-L-lactic Acid and Poly-D-lactic Acid

Mixtures of poly-L-lactic acid and poly-D-lactic acid were prepared by kneading poly-L-lactic acid and poly-D-lactic acid using a batch-type twin screw extruder under the same conditions as in Comparative Examples 9 and 12 for 60 minutes and then adding 10 parts by weight of a plasticizer, followed by further kneading the resulting mixture for 5 minutes. The combinations of poly-L-lactic acid, poly-D-lactic acid and the plasticizer were as shown in Table 2.

As shown in Table 2, the weight average molecular weights of the mixtures of poly-L-lactic acid and poly-D-lactic acid in Comparative Example 10 and 13 were 84,000 and 51,000, respectively, and the molecular weight tended to be low due to kneading for a long time as in the cases of Comparative Examples 9 and 12. The total number of the segment(s) composed of L-lactic acid units and segment(s) composed of D-lactic acid units contained per one molecule of the mixture of poly-L-lactic acid and poly-D-lactic acid was 1. On the other hand, in terms of the thermal properties of the molded product, the parameter of thermal properties (Tm-Tms)/(Tme-Tm) was not less than 2.0 in both cases and higher than in Examples. The cooling crystallization temperature was 103°C and 120°C in Comparative Examples 10 and 13, respectively, and almost the same as in Comparative Examples 9 and 12.

(Comparative Examples 14 to 17)

(1) Mixtures of Poly-L-lactic Acid and Poly-D-lactic Acid

Mixtures of Poly-L-lactic acid and poly-D-lactic acid were prepared by kneading using a twin screw extruder in the same manner as in Examples 1 to 7. All of poly-L-lactic acid, poly-D-lactic acid and the nuclear agent were fed to the twin screw extruder from the resin hopper, and the kneading temperature was set to 240°C for carrying out kneading. The combinations of poly-L-lactic acid, poly-D-lactic acid and the nuclear agent were as shown in Table 2.

The polylactic acid mixtures obtained by kneading had weight average molecular weights of 110,000 to 120,000 in Comparative Examples 14 to 16, while the molecular weight in Comparative Example 17 was 65,000 and tended to be low. The total number of the segment(s) composed of L-lactic acid units and segment(s) composed of D-lactic acid units contained per one molecule of the polylactic acid stereocomplex was 1. The melting points of the polylactic acid mixtures observed were not less than 200°C due to stereocomplex formation, but the cooling crystallization temperature could be observed only in Comparative Examples 14 to 16 wherein a nuclear agent was used in combination.

[Table 2]

| | PLLA, PDLA (Mw×10⁴) | Mixing composition ratio of L/D wt/wt | L/D molecular weight ratio | Parts by weight | Type | Parts by weight | Type | Parts by weight | Mixture | Mwx 10⁴ | Mp (%) | Polydipersity | Average sequence length | Melting point of mixture (°C) | (Tm-Tms) / (Tme-Tm) | Sc (%) | Cooling crystallization temperature (°C) |
|---|---|---|---|---|---|---|---|---|---|---|---|---|---|---|---|---|---|
| | | | | | Raw material | | | | Mixture of poly-L-lactic acid & poly-D-lactic acid | | | | | | | | |
| | | Polymer | | | Nuclear agent | | Plasticizer | | | | | | | | | | |
| Comparative Example 8 | PLA7 (20.1) / PDA6 (130) | 50/50 | 6.5 | 100 | | | | | SC 14 | 27.5 | 67 | 1.7 | 47 | 173/215 | 2.2 | 42 | ND |
| Comparative Exemple 9 | PLA7 (20.1) / PDA6 (130) | 50/50 | 6.6 | 100 | | | | | SC 15 | 8.1 | 42 | 1.6 | 23 | 213 | 2.1 | 100 | 105 |
| Comparative Example 10 | PLA7 (20.1) / POA6 (130) | 50/50 | 6.5 | 90 | | | P1 | 10 | SC 16 | 7.2 | 38 | 1.6 | 19 | 212 | 2.1 | 100 | 103 |
| Comparative Example 11 | PLA7 (20.1) / PDA7 (19.8) | 50/50 | 1.0 | 100 | | | | | SC 17 | 10.8 | 48 | 1.7 | 30 | 172/219 | 2.1 | 58 | ND |
| Comparative Example 12 | PLA7 (20.1) / PDA7 (19.8) | 50/50 | 1.0 | 100 | | | | | SC 18 | 5.1 | 32 | 1.6 | 15 | 212 | 2.0 | 100 | 125 |
| Comparative Example 1 3 | PLA7 (20.1) / PDA7 (19.8) | 50/50 | 1.0 | 90 | | | P1 | 10 | SC 19 | 5.0 | 33 | 1.6 | 13 | 211 | 2.0 | 100 | 120 |

EP 2 612 878 B1

| | | Raw material | | | | | | | Mixture of poly-L-lactic acid & poly-D-lactic acid | | | | | | | | |
| | Polymer | | | | Nuclear agent | | Plasticizer | | | | | | | | | | |
| | PLLA, PDLA (Mw×10^4) | Mixing composition ratio of L/D wt/wt | L/D molecular weight ratio | Parts by weight | Type | Parts by weight | Type | Parts by weight | Mixture | Mwx 10^4 | Mp (%) | Polydipersity | Average sequence length | Melting point of mixturo (°C) | (Tm-Tms) / (Tme-Tm) | Sc (%) | Cooling crystallization temperature (°C) |
|---|---|---|---|---|---|---|---|---|---|---|---|---|---|---|---|---|---|
| Comparative Example 14 | PLA8 (12.2) / PDA8 (12.0) | 50/50 | 1.0 | 100 | | | | | SC 20 | 11.3 | 45 | 1.7 | 31 | 169/211 | 2.3 | 52 | ND |
| Comparative Example 15 | PLA8 (12.2) / PDA8 (12.0) | 50/50 | 1.0 | 100 | N1 | 1 | | | SC 21 | 11.2 | 45 | 1.7 | 26 | 170/213 | 2.2 | 73 | 118 |
| Comparative Example 16 | PLA8 (12.2) / PDA8 (12.0) | 50/50 | 1.0 | 100 | N2 | 1 | | | SC 22 | 10.8 | 44 | 1.7 | 24 | 169/210 | 2.2 | 71 | 115 |
| Comparative Example 17 | PLA8 (12.2) / PDA8 (12.0) | 50/50 | 1.0 | 100 | N3 | 1 | | | SC 23 | 6.5 | 37 | 1.7 | 17 | 168/211 | 2.1 | 90 | 130 |

Nuclear angent
N1: ethylene-bis-lauric acid amide ("Slipacks L" manufactured by Nippon Kasel Chemical Co., Ltd.),
N2: Phosphate ester sodium salt ("NA-11" manufactured by ADEKA CORPORATION).
N3: Phosphato ostor aluminum salt ("NA-71" manufactured by ADEKA CORPORATION)
Plasticizer
P1: Polyglycoryl fatty acid ostor ("Chirabazol" manufactured by Taiyo Kagaku Co., Ltd.]

EP 2 612 878 B1

36

(Examples 8 to 14, Comparative Examples 18 to 24)

As shown in Table 3, the polylactic acid block copolymers obtained in Examples 1 to 7 and Comparative Examples 1 to 6 (SB1 to SB7 and SB8 to SB13) and the polylactic acid mixture obtained in Comparative Example 7 (SB14) were subjected to melt mixing using a twin screw extruder with 0.05 part of a phosphorus catalyst deactivating agent at 240°C to perform catalyst deactivation. Subsequently, each mixture was melted by heating at 240°C for 2 minutes, and pressed at a pressing temperature of 80°C to prepare a pressed sheet having a thickness of 0.1 mm (100 μm). Thereafter, the pressed sheet was subjected to heat treatment under a nitrogen atmosphere under the heat treatment conditions of 110°C for 30 minutes, to prepare a sheet-shaped molded product for various kinds of measurement.

The values of various physical properties measured after sampling the central portion of the sheet-shaped molded product were as shown in Table 3. In any of Examples 8 to 14 and Comparative Examples 18 to 24, the relative degree of crystallinity of the sheet-shaped molded product was 100%. The haze value was measured for the sample prepared by cutting out a piece having a size of 5 cm × 5 cm from the central portion of the sheet-shaped molded product, and, as a result, it was found that the sheet-shaped molded products in Examples 8 to 14 have haze values of less than 10% and are excellent in transparency. On the other hand, the haze values of the sheet-shaped molded products of Comparative Examples 18 to 24 were not less than 10% except for the sheet-shaped molded product of Comparative Example 21, which had a haze value of less than 10%.

Subsequently, the central portion of each sheet-shaped molded product was cut into a piece having a size of 40 mm × 2 mm to provide a strip-shaped sample, and the sample was subjected to measurement of the storage modulus at 130°C according to viscoelasticity. As a result, any of the sheet-shaped molded products of Examples 8 to 14 had a storage modulus of not less than 2 GPa, and was excellent in heat resistance. Measurement of the tensile strength of the strip-shaped samples revealed that any of these has a value of not less than 60 MPa. On the other hand, in terms of the sheet-shaped molded products of Comparative Examples 18 to 24, the storage modulus at 130°C was not less than 2 GPa in Comparative Examples 21, 23 and 24, but was less than 2 GPa in the other cases. In terms of the tensile strength of the strip-shaped samples, all the sheet-shaped molded products showed a value of less than 60 MPa, which indicates lower physical properties than in Examples.

Subsequently, each sheet-shaped molded product was heated using a vacuum forming machine under the conditions of a heating temperature of 100°C and heating time of 60 seconds, and brought into close contact with a metal mold at a mold temperature of 40°C while the pressure inside the metal mold was reduced, to obtain a cylindrical container having an inner diameter of 6 cm and a depth of 10 cm. This cylindrical container was subjected to heat treatment under a nitrogen atmosphere under the heat treatment conditions of 110°C for 30 minutes. The container was then filled with water and the lid was closed. Thereafter, the container was dropped onto concrete from a height of 2 m with its bottom facing downward, and the number of times of this operation was counted until the container was broken due to the drop impact to cause leakage of water. As a result, all of the samples of Examples 8 to 14 were confirmed to have good impact resistance. In contrast, in terms of the samples of Comparative Examples 18 to 24, breakage of the container and leakage of water were observed after less than 5 times of the dropping.

Further, sheets were obtained in the same manner as in Examples 8 to 10 except that the press temperature was 40°C; sheet thickness was 1 mm; and heat treatment was carried out at 80°C for 5 seconds and at 110°C for 30 seconds. The haze values of the resulting sheets were not more than 20% in all cases.

(Comparative Example 25)

The polylactic acid block copolymer obtained by solid-phase polymerization in Example 1 was subjected to catalyst deactivation before preparation of a sheet-shaped molded product. The method of catalyst deactivation was the same as in Examples 8 to 14. Subsequently, the polylactic acid block copolymer subjected to catalyst deactivation was melted by heating at 240°C for 2 minutes, and then pressed at a press temperature of 80°C to prepare a press sheet having a thickness of 0.1 mm, followed by cooling the sheet in ice water, to provide a sheet-shaped molded product for various kinds of measurement. The methods of measurement of various kinds of physical properties of the sheet-shaped molded product were the same as in Examples 8 to 14.

As shown in Table 3, the relative degree of crystallinity of the sheet-shaped molded product of Comparative Example 25 was as low as 10% since heat treatment of the molded product was not carried out. Further, the haze value of the molded product having a thickness of 100 μm was 2% since heat treatment was not carried out, and the transparency was high. However, the tensile strength and impact resistance of the sheet-shaped molded product were lower than those in Examples 8 to 14, and the storage modulus at 130°C could not be measured because the molded product was broken in the process of temperature increase during the measurement.

(Comparative Example 26)

The mixture of poly-L-lactic acid and poly-D-lactic acid SC1 obtained in Example 1 was subjected to catalyst deactivation before preparation of a sheet-shaped molded product. The method of catalyst deactivation was the same as in Examples 8 to 14. Subsequently, a molded product for measuring various kinds of physical properties was prepared using the SC1 after catalyst deactivation. The method of preparation of the molded product and the methods of measurement of physical properties were the same as in Examples 8 to 14.

As shown in Table 3, the relative degree of crystallinity of the sheet-shaped molded product of Comparative Example 26 was 100%. The haze value of the molded product at a thickness of 100 $\mu$m was 14%, and the transparency was therefore high. The storage modulus of the sheet-shaped molded product at 130°C was as high as 2.4 GPa, but the tensile strength and the impact resistance were inferior to those of Examples 8 to 14.

(Comparative Examples 27, 28, 30 and 31)

The polylactic acid mixtures obtained in Comparative Examples 8, 9, 11 and 12 (SC14, SC15, SC17 and SC18) were subjected to catalyst deactivation before preparation of sheet-shaped molded products. The method of catalyst deactivation was the same as in Examples 13 to 24. Subsequently, a molded product for measuring various kinds of physical properties was prepared using each of the polylactic acid mixtures after catalyst deactivation. The method of preparation of the molded product for measuring various kinds of physical properties and the methods of measurement of physical properties were the same as in Examples 8 to 14.

As shown in Table 3, in terms of the relative degrees of crystallinity of the sheet-shaped molded products of the Comparative Examples, Comparative Examples 28, 30 and 31 each showed a value of 100%, but Comparative Example 27 showed a value of as low as 78%. In terms of the haze value of the molded product at a thickness of 100 $\mu$m, Comparative Example 31 showed a value of 22%, but Comparative Examples 27, 28 and 30 showed values of not less than 40%, having lower transparency compared to Examples 8 to 14. Further, the storage moduli of the sheet-shaped molded products at 130°C were not more than 2 GPa, indicating lower rigidity at high temperature.

In terms of the tensile strength and the impact resistance of the sheet-shaped molded products, Comparative Example 27, wherein the molecular weight of the molded product was high, showed excellent values, but Comparative Examples 28, 30 and 31 showed lower values compared to Examples 8 to 14.

(Comparative Examples 29 and 32)

The polylactic acid mixtures obtained in Comparative Examples 10 and 13 (SC15 and SC19) were subjected to catalyst deactivation before preparation of sheet-shaped molded products. The method of catalyst deactivation was the same as in Examples 13 to 24. Subsequently, a molded product for measuring various kinds of physical properties was prepared using each of the polylactic acid mixtures after catalyst deactivation. The method of preparation of the molded product for measuring various kinds of physical properties and the methods of measurement of physical properties were the same as in Examples 8 to 14.

As shown in Table 3, the relative degree of crystallinity of the sheet-shaped molded product was 100% in each Comparative Example. The haze value of the molded product at a thickness of 100 $\mu$m was lower than in Comparative Examples 23 and 26 due to addition of a plasticizer, resulting in improved transparency, but the tensile strength of the molded product tended to be low due to addition of the plasticizer.

(Comparative Examples 33 to 37)

The polylactic acid obtained in Reference Example 13 (PLA8) and the polylactic acid mixtures obtained in Comparative Examples 14 to 17 (SC20 to SC23) were subjected to catalyst deactivation before preparation of sheet-shaped molded products. The method of catalyst deactivation was the same as in Examples 13 to 24. Subsequently, a molded product for measuring various kinds of physical properties was prepared using each of the polylactic acid mixtures after catalyst deactivation.

As shown in Table 3, the relative degree of crystallinity of the sheet-shaped molded product of any of the Comparative Examples was 100%. In terms of the haze value of the molded product at a thickness of 100 $\mu$m, Comparative Examples 33 and 34 showed values of not less than 50%, having low transparency, and Comparative Examples 35 to 37 showed values of as low as 13 to 15% due to combined use of a nuclear agent. In terms of the mechanical properties of the molded products, any of the products showed a lower value compared to Examples 8 to 14, and both the tensile strength and the impact resistance tended to be even lower in Comparative Example 37 wherein the molecular weight was especially low.

[Table 3]

| | Polymer type | Relative degree of crystallinity (%) | 0.1mm thick Haze (%) | 130°C storage modulus | Tensile strength (Mpa) | Impact resistance Drop test |
|---|---|---|---|---|---|---|
| Example 8 | SB1 | 100 | 1 | 3.0 | 70 | A |
| Example 9 | SB2 | 100 | 3 | 2.3 | 68 | A |
| Example 10 | SB3 | 100 | 2 | 3.1 | 72 | A |
| Example 11 | SB4 | 100 | 4 | 2.4 | 71 | A |
| Example 12 | SB5 | 100 | 2 | 2.9 | 67 | A |
| Example 13 | SB6 | 100 | 5 | 2.2 | 67 | A |
| Example 14 | SB7 | 100 | 4 | 2.2 | 65 | A |
| Comparative Example 18 | SB8 | 100 | 10 | 1.9 | 54 | B |
| Comparative Example 19 | SB9 | 100 | 15 | 1.7 | 56 | B |
| Comparative Example 20 | SB10 | 100 | 12 | 1.6 | 52 | B |
| Comparative Example 21 | SB11 | 100 | 5 | 2.4 | 41 | F |
| Comparative Example 22 | SB12 | 100 | 45 | 1.6 | 59 | B |
| Comparative Example 23 | SB13 | 100 | 17 | 2.0 | 55 | B |
| Comparative Example 24 | SB14 | 100 | 19 | 2.5 | 51 | B |
| Comparative Example 25 | SB1 | 10 | 2 | - | 40 | B |
| Comparative Example 26 | SC1 | 100 | 14 | 2.4 | 42 | B |
| Comparative Example 27 | SC14 | 78 | 76 | 1.6 | 68 | A |
| Comparative Example 28 | SC15 | 100 | 42 | 1.8 | 57 | B |
| Comparative Example 29 | SC16 | 100 | 36 | 1.7 | 55 | B |
| Comparative Example 30 | SC17 | 100 | 45 | 1.9 | 50 | B |
| Comparative Example 31 | SC18 | 100 | 22 | 2.4 | 40 | F |
| Comparative Example 32 | SC19 | 100 | 13 | 1.7 | 35 | B |
| Comparative Example 33 | PLA8 | 100 | 90 | 1.4 | 60 | B |
| Comparative Example 34 | SC20 | 100 | 52 | 1.6 | 58 | B |

(continued)

|  | Polymer type | Relative degree of crystallinity (%) | 0.1mm thick Haze (%) | 130°C storage modulus | Tensile strength (Mpa) | Impact resistance Drop test |
|---|---|---|---|---|---|---|
| Comparative Example 35 | SC21 | 100 | 15 | 2.5 | 62 | A |
| Comparative Example 36 | SC22 | 100 | 13 | 2.4 | 61 | A |
| Comparative Example 37 | SC23 | 100 | 11 | 2.5 | 48 | F |

[Reference Example 17]

In a reaction vessel equipped with an agitator, 100 parts of L-lactide and 0.15 part of lauryl alcohol were uniformly melted under a nitrogen atmosphere at 160°C. Thereafter, 0.01 part of stannous octoate was added and ring-opening polymerization reaction was performed for 2 hours. After the polymerization reaction, the reaction product was dissolved in chloroform, and unreacted monomers were removed by allowing reprecipitation with stirring in methanol (5 times the amount of chloroform), to obtain poly-L-lactic acid (PLA9). The weight average molecular weight of PLA9 was 75,000; the polydispersity was 1.6; and the melting point was 169°C.

Subsequently, 100 parts of the obtained PLA9 was melted in a reaction vessel equipped with an agitator under a nitrogen atmosphere at 200°C, and 120 parts of D-lactide was fed thereto. Thereafter, 0.01 part of stannous octoate was added thereto and polymerization reaction was performed for 3 hours. Subsequently, 0.03 part of a phosphorus catalyst deactivating agent was added to the reaction system and the resulting mixture was stirred for 10 minutes to perform catalyst deactivation. The obtained reaction product was dissolved in chloroform, and unreacted monomers were removed by allowing reprecipitation with stirring in methanol (5 times the amount of chloroform), to obtain a polylactic acid block copolymer (LD-1) in which a segment composed of D-lactic acid units is bound to PLA9 composed of L-lactic acid units, which polylactic acid block copolymer has 2 segments. The molecular weight of LD-1 was 148,000, and the melting point was 210°C. The ratio of the weight average molecular weight of the segment composed of L-lactic acid units with respect to the weight average molecular weight of the segment composed of D-lactic acid units, which segments constitute the polylactic acid block copolymer, was 1.0.

[Reference Example 18]

In a reaction vessel equipped with an agitator, 100 parts of L-lactide and 0.2 part of ethylene glycol were uniformly melted under a nitrogen atmosphere at 160°C. Thereafter, 0.01 part of stannous octoate was added and ring-opening polymerization reaction was performed for 2 hours. After the polymerization reaction, the reaction product was dissolved in chloroform, and unreacted monomers were removed by allowing reprecipitation with stirring in methanol (5 times the amount of chloroform), to obtain poly-L-lactic acid (PLA10). The weight average molecular weight of PLA10 was 50,000; the polydispersity was 1.6; and the melting point was 165°C.

Subsequently, 100 parts of the obtained PLA10 was melted in a reaction vessel equipped with an agitator under a nitrogen atmosphere at 200°C, and 120 parts of D-lactide was fed thereto. Thereafter, 0.01 part of stannous octoate was added thereto and polymerization reaction was performed for 3 hours. Subsequently, 0.03 part of a phosphorus catalyst deactivating agent was added to the reaction system and the resulting mixture was stirred for 10 minutes to perform catalyst deactivation. The obtained reaction product was dissolved in chloroform, and unreacted monomers were removed by allowing reprecipitation with stirring in methanol (5 times the amount of chloroform), to obtain a polylactic acid block copolymer (LD-2) in which segments composed of D-lactic acid units are bound to both terminal groups of PLA10 composed of L-lactic acid units, which polylactic acid block copolymer has 3 segments. The molecular weight of LD-2 was 150,000, and the melting point was 210°C. The ratio of the weight average molecular weight of the segment(s) composed of L-lactic acid units with respect to the weight average molecular weight of the segment(s) composed of D-lactic acid units, which segments constitute the polylactic acid block copolymer, was 1.0.

[Reference Example 19]

In a twin screw extruder, 50 parts of the poly-L-lactic acid (PLA4) obtained in Reference Example 4 and 50 parts of the poly-D-lactic acid (PDA1) obtained in Reference Example 7 were mixed, and the resulting mixture was subjected to solid-phase polymerization, to obtain a polylactic acid block copolymer (LD-3) having more than 3 segments. The mixing method and the method of phase polymerization were the same as in Examples 8 to 14. The polylactic acid block copolymer obtained by solid-phase polymerization was subjected to melt mixing using a twin screw extruder with 0.05 part of a phosphorus catalyst deactivating agent at 240°C to perform catalyst deactivation. The molecular weight of the obtained LD-3 was 125,000; the melting point was 221°C; and the degree of stereocomplexation was 100%. The ratio of the weight average molecular weight of the segment(s) composed of L-lactic acid units with respect to the weight average molecular weight of the segment(s) composed of D-lactic acid units, which segments constitute the polylactic acid block copolymer, was 13.5.

(Comparative Example 38)

(1) Production and Physical Properties of Molded Product

The method for producing a molded product for measurement of various physical properties and the methods for measuring physical properties were the same as in Examples 8 to 14.

The relative degree of crystallinity of the molded product of LD-1 obtained in Reference Example 13 was 100%. In terms of the thermophysical properties of the molded product, a high melting point was observed at 208°C, and the degree of stereocomplexation was 100%. However, the parameter of thermal properties (Tm-Tms)/(Tme-Tm) was 1.9 and the cooling crystallization temperature was 110°C, indicating lower crystallization properties than in Examples 1 to 7. The haze value of the molded product at a thickness of 100 $\mu$m was 34%, which was higher than in Examples 8 to 14, and, in terms of the mechanical properties, both the tensile strength and the impact resistance were the same as in Examples 8 to 14.

(Comparative Examples 39 and 40)

(1) Production of Polylactic Acid Resin Compositions

Polylactic acid and polylactic acid block copolymers were mixed at ratios shown in Table 4, and the resulting mixtures were subjected to melt mixing using a single screw extruder having a diameter of 40 mm at a cylinder temperature of 240°C and a rotation speed of 50 rpm, to obtain polylactic acid resin compositions.

(2) Production and Physical Properties of Molded Products

The method for producing molded products for measurement of various physical properties and the methods for measuring physical properties were the same as in Examples 8 to 14.

The relative degree of crystallinity of the molded product in both Comparative Examples 39 and 40 was 100%. In terms of the thermophysical properties of each molded product, a high melting points was observed at about 210°C, and the degree of stereocomplexation was 68% and 89, respectively, indicating that the higher the content of the polylactic acid block copolymer, the higher the degree of stereocomplexation. The cooling crystallization temperature was 103°C and 105°C in Comparative Examples 39 and 40, respectively, suggesting lower crystallization properties compared to Examples 1 to 7. The haze value of the molded product at a thickness of 100 $\mu$m was 35% and 32% in Comparative Examples 39 and 40, respectively, suggesting poorer transparency compared to Examples 8 to 14. In terms of the mechanical properties of the molded product, both the tensile strength and the impact resistance were the same as in Examples 8 to 14.

(Example 15)

(1) Production of Polylactic Acid Resin Composition

Melt mixing was carried out in the same manner as in Comparative Example 39 except that LD-3 was used as the polylactic acid block copolymer, to obtain a polylactic acid resin composition.

(2) Production and Physical Properties of Molded Product

The method for producing a molded product for measurement of various physical properties and the methods for measuring physical properties were the same as in Examples 8 to 14.

The relative degree of crystallinity of the molded product was 100%. In terms of the thermophysical properties of the molded product, a high melting point was observed at 212°C, and the degree of stereocomplexation was 92%.

The cooling crystallization temperature was 130°C, indicating excellent crystallization properties. The haze value of the molded product at a thickness of 100 μm was 15%, indicating excellent transparency. In terms of the mechanical properties of the molded product, both the tensile strength and the impact resistance were the same as in Examples 8 to 14.

(Example 16)

(1) Production of Polylactic Acid Resin Composition

A polymethyl methacrylate resin having a weight average molecular weight of 100,000, glass-transition temperature of 90°C and syndiotacticity of 39% ("Sumipex" LG35 manufactured by "Sumitomo Chemical Co., Ltd."), a polylactic acid resin and a polylactic acid block copolymer were mixed at the ratio as shown in Table 4 and the resulting mixture was melt-mixed using a single screw extruder to obtain a polylactic acid resin composition. The conditions for melt mixing were the same as in Comparative Examples 39 and 40.

(2) Physical Properties of Molded Product

The method of preparation of the molded product for measuring various kinds of physical properties and the methods of measurement of physical properties were the same as in Examples 8 to 14.

The relative degree of crystallinity of the polylactic acid resin composition contained in the molded product of Example 16 was 100%. In terms of the thermophysical properties of the molded product, a high melting point was observed at about 210°C, and the degree of stereocomplexation was 80%. The cooling crystallization temperature was 128°C, which was almost the same as in Example 15. The haze value of the molded product at a thickness of 100 μm was 8%, which indicates excellent transparency. In terms of the mechanical properties of the molded product, both the tensile strength and the impact resistance were equivalent to those in Examples 8 to 14.

Thus, the polylactic acid block copolymer of the present invention was excellent in heat resistance, crystallinity, transparency and mechanical properties also as a molded product.

[Table 4]

| | | Comparative Example 38 | Comparative Example 39 | Comparative Example 40 | Example 15 | Example 16 |
|---|---|---|---|---|---|---|
| Poly lactic acid | L-4 (Parts by weight) | | 70 | 30 | 30 | 20 |
| | LD-1 (Parts by weight) | 100 | | | | |
| | LD-2 (Parts by weight) | | 30 | 70 | | |
| | LD-3 (Parts by weight) | | | | 70 | 60 |
| Poly methylmethacrylate (Parts by weight) | | | | | | 20 |
| Mw ratio between segment composed of L-lactic acid units and segment composed of D-lactic acid units in polylactic acid block copolymer | | 1.0 | 1.0 | 1.0 | 13.5 | 13.5 |

(continued)

| | | Comparative Example 38 | Comparative Example 39 | Comparative Example 40 | Example 15 | Example 16 |
|---|---|---|---|---|---|---|
| Molded product | Mw×10⁴ | 14.6 | 15.3 | 16.3 | 16.5 | 14.9 |
| | Mp | 62 | 65 | 65 | 61 | 61 |
| | Polydipersity | 1.6 | 1.6 | 1.6 | 1.6 | 1.6 |
| | Average sequence length | 31 | 32 | 28 | 30 | 23 |
| | Relative crystallinity degree (%) | 100 | 100 | 100 | 100 | 100 |
| | Melting point (°C) | 208 | 170/208 | 169/208 | 171/212 | 167/210 |
| | (Tm-Tms)/(Tme-Tm) | 1.9 | 1.5 | 1.5 | 1.2 | 1.2 |
| | Sc(%) | 100 | 68 | 89 | 92 | 80 |
| | Cooling crystallization temperature (°C) | 110 | 103 | 105 | 130 | 128 |
| | 100μm thick Haze (%) | 34 | 35 | 32 | 15 | 8 |
| | 130°C storage modulus (Gpa) | 2.7 | 2.2 | 2.3 | 2.4 | 2.3 |
| | Tensile strength (Mpa) | 69 | 64 | 67 | 68 | 65 |
| | Impact resistance (Drop test) | A | A | A | A | A |

L-4: Poly-L-lactic acid by ring-opening polymerization; Mw 201,000; Mp 173°C
LD-1: Poly lactic acid diblock copolymer by ring-opening polymerization; Mw 135,000; Mp 208°C
LD-2: Poly lactic acid triblock copolymer by ring-opening polymerization; Mw 150,000; Mp 210°C
LD-3: Poly lactic acid block copolymer by direct polycondensation; Mw 125,000; Mp 221°C
Poly methylmethacrylate: Mw 100,000, Tg 90°C, Syndiotacticity 39% ("SUMIPEX" LG35 manufactured by Sumitomo Chemical Co., Ltd.)

INDUSTRIAL APPLICABILITY

Since the polylactic acid block copolymer of the present invention has a high molecular weight, high melting point and excellent transparency, it can be suitably applied to fields in which use of polylactic acid homopolymers has been difficult because of requirement of heat resistance and transparency.

**Claims**

1. A polylactic acid block copolymer constituted by a poly-L-lactic acid segment(s) containing as a major component L-lactic acid and a poly-D-lactic acid segment(s) containing as a major component D-lactic acid, said polylactic acid block copolymer satisfying the Inequalities (1) and (2) below:

$$Sc = \Delta Hh/(\Delta Hl + \Delta Hh) \times 100 \geq 80 \qquad (1)$$

wherein Sc is the degree of stereocomplexation [%], which means the ratio of stereocomplex crystals contained with respect to the total crystals in the polylactic acid, $\Delta Hh$ represents the heat of fusion of stereocomplex crystals in DSC measurement wherein the temperature is increased at a heating rate of 20 °C/min. (J/g); and $\Delta Hl$ represents the heat of fusion of crystals of poly-L-lactic acid alone and crystals of poly-D-lactic acid alone in DSC measurement wherein the temperature is increased at a heating rate of 20 °C/min. (J/g)

$$1 < (Tm - Tms)/(Tme - Tm) < 1.8 \qquad (2)$$

(wherein Tm represents the melting point derived from stereocomplex crystals observed at not less than 190 °C and less than 250 °C in DSC measurement wherein the temperature is increased at a heating rate of 40 °C/min.; Tms represents the beginning temperature of melting of stereocomplex crystals observed at not less than 190 °C and less than 250 °C in DSC measurement wherein the temperature is increased at a heating rate of 40 °C/min.; and Tme represents the end temperature of melting of stereocomplex crystals observed at not less than 190 °C and less than 250 °C in DSC measurement wherein the temperature is increased at a heating rate of 40 °C/min.), obtained by

(A) mixing poly-L-lactic acid and poly-D-lactic acid one of which has a weight average molecular weight of 60,000 to 300,000 and the other of which has a weight average molecular weight of 10,000 to 50,000, or
(B) mixing poly-L-lactic acid and poly-D-lactic acid having a ratio between the weight average molecular weight of poly-L-lactic acid and the weight average molecular weight of poly-D-lactic acid of not less than 2 and less than 30,

to obtain a mixture having a weight average molecular weight of not less than 90,000 and satisfying the Inequality (3) below:

$$Sc = \Delta Hh/(\Delta Hl + \Delta Hh) \times 100 > 60 \text{ to} \leq 99 \qquad (3)$$

wherein the weight average molecular weight is measured by gel permeation chromatography (GPC) using hexafluoroisopropanol as a solvent and calculated in terms of poly(methyl methacrylate) standards, and
Sc is the degree of stereocomplexation [%] of the kneaded mixture, which means the ratio of stereocomplex crystals contained with respect to the total crystals in the polylactic acid, $\Delta Hh$ represents the heat of fusion of stereocomplex crystals in DSC measurement wherein the temperature is increased at a heating rate of 20 °C/min. (J/g); and $\Delta Hl$ represents the heat of fusion of crystals of poly-L-lactic acid alone and crystals of poly-D-lactic acid alone in DSC measurement wherein the temperature is increased at a heating rate of 20 °C/min. (J/g),
where poly-L-lactic acid and poly-D-lactic acid are melt-mixed at a temperature of not less than the end of melting point of the component having a higher melting point,
followed by subjecting said mixture to solid-phase polymerization at a temperature lower than the melting point of said mixture.

2. The polylactic acid block copolymer according to claim 1, wherein, in the molecular weight distribution of said polylactic acid block copolymer, the ratio of molecular weights of not less than 100,000 over the whole molecular weight distribution is not less than 40%, where said ratio is calculated according to the Equation (4) below, wherein (c) represents the area of the whole molecular weight distribution curve and (d) represents the area of the portion corresponding to molecular weights of not less than 100,000

$$Mwp = (d)/(c) \times 100 \qquad (4).$$

3. The polylactic acid block copolymer according to claim 1 or 2, wherein, in DSC measurement of said polylactic acid block copolymer, the cooling crystallization temperature is not less than 130 °C when the temperature of said polylactic acid block copolymer is increased to 250 °C at a heating rate of 20 °C and then kept constant for 3 minutes, followed by decreasing the temperature at a cooling rate of 20 °C/min.

4. The polylactic acid block copolymer according to any one of claims 1 to 3, wherein the polydispersity represented by the ratio between the weight average molecular weight and the number average molecular weight is not more than 2.7, measured by gel permeation chromatography (GPC) using hexafluoroisopropanol as a solvent and calculated in terms of poly(methyl methacrylate) standards.

5. The polylactic acid block copolymer according to any one of claims 1 to 4, wherein the average sequence length of L-lactic acid units and D-lactic acid units in said polylactic acid block copolymer is not less than 20, calculated by $^{13}$C-NMR measurement according to the Equation (5) below, wherein (a) represents the integrated value of the peak at 170.1 to 170.3 ppm among the peaks of carbon atoms belonging to carbonyl carbon atom and (b) represents the integrated value of the peak at 169.8 to 170.0 ppm

$$\text{Average sequence length}=(a)/(b) \qquad (5).$$

6. The polylactic acid block copolymer according to any one of claims 1 to 5, wherein the weight ratio between the L-lactic acid component and the D-lactic acid component in said polylactic acid block copolymer is within the range of 80/20 to 60/40 or within the range of 40/60 to 20/80.

7. The polylactic acid block copolymer according to any one of claims 1 to 6, whose weight average molecular weight is not less than 100,000.

8. A molded product comprising the polylactic acid block copolymer according to any one of claims 1 to 7, said molded product having a relative degree of crystallinity of not less than 90% and comprising a part having a haze value of not more than 30% when the thickness of said molded product is 100 $\mu$m.

**Patentansprüche**

1. Polymilchsäureblockcopolymer, das aus einem Poly-L-Milchsäuresegment(en), das als eine Hauptkomponente L-Milchsäure enthält, und einem Poly-D-Milchsäuresegment(en) besteht, das als eine Hauptkomponente D-Milchsäure enthält, wobei das Polymilchsäureblockcopolymer die nachstehenden Ungleichungen (1) und (2) erfüllt:

$$Sc = \Delta Hh / (\Delta Hl + \Delta Hh) \times 100 \geq 80 \qquad (1)$$

wobei Sc der Stereokomplexierungsgrad [%] ist, der das Verhältnis von den enthaltenen Stereokomplexkristallen in Bezug auf die Gesamtkristalle in der Polymilchsäure bedeutet, $\Delta$Hh die Fusionswärme der Stereokomplexkristalle in einer DSC-Messung repräsentiert, wobei die Temperatur mit einer Erwärmungsgeschwindigkeit von 20 °C/min erhöht wird (J/g); und $\Delta$HI die Fusionswärme der Kristalle der Poly-L-Milchsäure alleine und der Kristalle der Poly-D-Milchsäure alleine in einer DSC-Messung repräsentiert, wobei die Temperatur mit einer Erwärmungsgeschwindigkeit von 20 °C/min erhöht wird (J/g),

$$1 < (Tm - Tms) / ( Tme - Tm) < 1,8 \qquad (2)$$

(wobei Tm den Schmelzpunkt repräsentiert, der sich von den Stereokomplexkristallen ableitet, beobachtet bei nicht weniger als 190 °C und weniger als 250 °C in einer DSC-Messung, wobei die Temperatur mit einer Erwärmungsgeschwindigkeit von 40 °C/min erhöht wird; Tms die Anfangstemperatur des Schmelzens von den Stereokomplexkristallen repräsentiert, beobachtet bei nicht weniger als 190 °C und weniger als 250 °C in einer DSC-Messung, wobei die Temperatur mit einer Erwärmungsgeschwindigkeit von 40 °C/min erhöht wird; und Tme die Endtemperatur des Schmelzens von den Stereokomplexkristallen repräsentiert, beobachtet bei nicht weniger als 190 °C und weniger als 250 °C in einer DSC-Messung, wobei die Temperatur mit einer Erwärmungsgeschwindigkeit von 40 °C/min erhöht wird), erhalten durch

(A) Mischen von Poly-L-Milchsäure und Poly-D-Milchsäure, wobei eine von beiden ein Gewichtsmittel des Molekulargewichts von 60.000 bis 300.000 und die andere von beiden ein Gewichtsmittel des Molekulargewichts von 10.000 bis 50.000 aufweist, oder
(B) Mischen von Poly-L-Milchsäure und Poly-D-Milchsäure, das ein Verhältnis zwischen dem Gewichtsmittel des Molekulargewichts der Poly-L-Milchsäure und dem Gewichtsmittel des Molekulargewichts der Poly-D-Milchsäure von nicht weniger als 2 und weniger als 30 aufweist,

um eine Mischung zu erhalten, die ein Gewichtsmittel des Molekulargewichts von nicht weniger als 90.000 aufweist und die nachstehende Ungleichung (3) erfüllt:

$$Sc = \Delta Hh / (\Delta Hl + \Delta Hh) \times 100 > 60 \text{ bis} \leq 99 \qquad (1)$$

wobei das Gewichtsmittel des Molekulargewichts mittels Gelpermeationschromatographie (GPC) gemessen wird, wobei als ein Lösungsmittel Hexafluorisopropanol verwendet wird und die Berechnung in Bezug auf Poly(methylmethacrylat)-Standards erfolgt, und

wobei Sc der Stereokomplexierungsgrad [%] der gekneteten Mischung ist, der das Verhältnis von den enthaltenen Stereokomplexkristallen in Bezug auf die Gesamtkristalle in der Polymilchsäure bedeutet, ΔHh die Fusionswärme der Stereokomplexkristalle in einer DSC-Messung repräsentiert, wobei die Temperatur mit einer Erwärmungsgeschwindigkeit von 20 °C/min erhöht wird (J/g); und ΔHI die Fusionswärme der Kristalle der Poly-L-Milchsäure alleine und der Kristalle der Poly-D-Milchsäure alleine in einer DSC-Messung repräsentiert, wobei die Temperatur mit einer Erwärmungsgeschwindigkeit von 20 °C/min erhöht wird (J/g),

wobei Poly-L-Milchsäure und Poly-D-Milchsäure bei einer Temperatur von nicht weniger als dem Ende des Schmelzpunkts von der Komponente schmelzgemischt werden, die einen höheren Schmelzpunkt aufweist, gefolgt vom Unterziehen der Mischung einer Festphasenpolymerisation bei einer Temperatur, die niedriger als der Schmelzpunkt der Mischung ist.

2. Polymilchsäureblockcopolymer nach Anspruch 1, wobei in der Molekulargewichtsverteilung von dem Polymilchsäureblockcopolymer das Verhältnis der Molekulargewichte mit nicht weniger als 100.000 über die gesamte Molekulargewichtsverteilung nicht weniger als 40 % beträgt, wobei das Verhältnis gemäß der nachstehenden Gleichung (4) berechnet wird, wobei (c) den Bereich der gesamten Molekulargewichtsverteilungskurve repräsentiert und (d) den Bereich des Teils repräsentiert, der den Molekulargewichten mit nicht weniger als 100.000 entspricht,

$$Mwp = (d) / (c) \times 100 \qquad (4).$$

3. Polymilchsäureblockcopolymer nach Anspruch 1 oder 2, wobei in der DSC-Messung des Polymilchsäureblockcopolymers die Kühlungskristallisationstemperatur nicht weniger als 130 °C beträgt, wenn die Temperatur des Polymilchsäureblockcopolymers mit einer Erwärmungsgeschwindigkeit von 20 °C auf 250 °C erhöht und dann für 3 Minuten konstant gehalten wird, gefolgt vom Verringern der Temperatur mit einer Kühlungsgeschwindigkeit von 20 °C/min.

4. Polymilchsäureblockcopolymer nach einem der Ansprüche 1 bis 3, wobei die Polydispersität, repräsentiert durch das Verhältnis zwischen dem Gewichtsmittel des Molekulargewichts und dem Zahlenmittel des Molekulargewichts, nicht mehr als 2,7 beträgt, gemessen mittels Gelpermeationschromatographie (GPC), wobei als ein Lösungsmittel Hexafluorisopropanol verwendet wird und die Berechnung in Bezug auf Poly(methylmethacrylat)-Standards erfolgt.

5. Polymilchsäureblockcopolymer nach einem der Ansprüche 1 bis 4, wobei die durchschnittliche Sequenzlänge der L-Milchsäureeinheiten und D-Milchsäureeinheiten in dem Polymilchsäureblockcopolymer nicht weniger als 20 beträgt, berechnet mittels $^{13}$C-NMR-Messung gemäß der nachstehenden Gleichung (5), wobei (a) den integrierten Wert des Peaks bei 170,1 bis 170,3 ppm aus den Peaks der Kohlenstoffatome, die zum Carbonylkohlenstoffatom gehören, repräsentiert, und (b) den integrierten Wert des Peaks bei 169,8 bis 170,0 ppm repräsentiert,

$$Durchschnittliche\ Sequenzlänge = (a) / (b) \qquad (5).$$

6. Polymilchsäureblockcopolymer nach einem der Ansprüche 1 bis 5, wobei das Gewichtsverhältnis zwischen der L-Milchsäure-Komponente und der D-Milchsäure-Komponente in dem Polymilchsäureblockcopolymer innerhalb des Bereichs von 80/20 bis 60/40 oder innerhalb des Bereichs von 40/60 bis 20/80 liegt.

7. Polymilchsäureblockcopolymer nach einem der Ansprüche 1 bis 6, dessen Gewichtsmittel des Molekulargewichts nicht weniger als 100.000 beträgt.

8. Geformtes Produkt, umfassend das Polymilchsäureblockcopolymer nach einem der Ansprüche 1 bis 7, wobei das geformte Produkt einen relativen Kristallinitätsgrad von nicht weniger als 90 % aufweist und einen Teil umfasst, der einen Trübungswert von nicht mehr als 30 % aufweist, wenn die Dicke von dem geformten Produkt 100 μm beträgt.

**Revendications**

1. Copolymère séquencé de poly(acide lactique) constitué de segment(s) de poly(acide lactique L) contenant en tant que composant majeur de l'acide lactique L et de segment(s) de poly(acide lactique D) contenant en tant que composant majeur de l'acide lactique D, ledit copolymère séquencé de poly(acide lactique) satisfaisant les inégalités (1) et (2) ci-dessous :

$$Sc = \Delta Hh/(\Delta Hl + \Delta Hh) \times 100 \geq 80 \qquad (1)$$

dans laquelle Sc est le degré de stéréocomplexation [%], qui désigne le rapport des cristaux stéréocomplexes contenus par rapport aux cristaux totaux dans le poly(acide lactique), $\Delta Hh$ représente la chaleur de fusion des cristaux stéréocomplexes dans une mesure par analyse calorimétrique différentielle dans laquelle la température est augmentée à un taux de chauffage de 20 °C/min. (J/g) ; et $\Delta Hl$ représente la chaleur de fusion des cristaux de poly(acide lactique L) seuls et des cristaux de poly(acide lactique D) seuls dans une mesure par analyse calorimétrique différentielle dans laquelle la température est augmentée à un taux de chauffage de 20 °C/min. (J/g)

$$1 < (Tm - Tms)/(Tme - Tm) < 1{,}8 \qquad (2)$$

(dans laquelle Tm représente le point de fusion dérivé des cristaux stéréocomplexes observés à pas moins de 190 °C et à moins de 250 °C dans une mesure par analyse calorimétrique différentielle dans laquelle la température est augmentée à un taux de chauffage de 40 °C/min. ; Tms représente la température du début de la fusion des cristaux stéréocomplexes observés à pas moins de 190 °C et à moins de 250 °C dans une mesure par analyse calorimétrique différentielle dans laquelle la température est augmentée à un taux de chauffage de 40 °C/min. ; et Tme représente la température de la fin de la fusion des cristaux stéréocomplexes observés à pas moins de 190 °C et à moins de 250 °C dans une mesure par analyse calorimétrique différentielle dans laquelle la température est augmentée à un taux de chauffage de 40 °C/min.), obtenu par

(A) mélange de poly(acide lactique L) et de poly(acide lactique D) dont l'un a un poids moléculaire moyen en poids de 60 000 à 300 000 et dont l'autre a un poids moléculaire moyen en poids de 10 000 à 50 000, ou
(B) mélange de poly(acide lactique L) et de poly(acide lactique D) ayant un rapport entre le poids moléculaire moyen en poids du poly(acide lactique L) et le poids moléculaire moyen en poids du poly(acide lactique D) non inférieur à 2 et inférieur à 30,

pour obtenir un mélange ayant un poids moléculaire moyen en poids non inférieur à 90 000 et satisfaisant l'inégalité (3) ci-dessous :

$$Sc = \Delta Hh/(\Delta Hl + \Delta Hh) \times 100 > 60 \text{ à } \leq 99 \qquad (3)$$

dans laquelle le poids moléculaire moyen en poids est mesuré par chromatographie d'exclusion diffusion (CED) en utilisant de l'hexafluoroisopropanol en tant que solvant et calculé en termes d'étalons de poly(méthacrylate de méthyle), et
Sc est le degré de stéréocomplexation [%] du mélange malaxé, qui désigne le rapport des cristaux stéréocomplexes contenus par rapport aux cristaux totaux dans le poly(acide lactique), $\Delta Hh$ représente la chaleur de fusion des cristaux stéréocomplexes dans une mesure par analyse calorimétrique différentielle dans laquelle la température est augmentée à un taux de chauffage de 20 °C/min. (J/g) ; et $\Delta Hl$ représente la chaleur de fusion des cristaux de poly(acide lactique L) seuls et des cristaux de poly(acide lactique D) seuls dans une mesure par analyse calorimétrique différentielle dans laquelle la température est augmentée à un taux de chauffage de 20 °C/min. (J/g),
où le poly(acide lactique L) et le poly(acide lactique D) sont mélangés à chaud à une température non inférieure au point de la fin de la fusion du composant ayant un point de fusion supérieur,
ce qui est suivi de la soumission dudit mélange à une polymérisation en phase solide à une température inférieure au point de fusion dudit mélange.

2. Copolymère séquencé de poly(acide lactique) selon la revendication 1, dans lequel, dans la répartition du poids moléculaire dudit copolymère séquencé de poly(acide lactique), le rapport des poids moléculaires non inférieurs à 100 000 sur l'ensemble de la répartition du poids moléculaire n'est pas inférieur à 40 %, où ledit rapport est calculé selon l'Équation (4) ci-dessous, dans laquelle (c) représente l'aire de l'ensemble de la courbe de répartition du poids moléculaire et (d) représente l'aire de la portion correspondant aux poids moléculaires inférieurs à 100 000

$$Mwp = (d)/(c) \times 100 \qquad (4).$$

**3.** Copolymère séquencé de poly(acide lactique) selon la revendication 1 ou 2, dans lequel, dans une mesure par analyse calorimétrique différentielle dudit copolymère séquencé de poly(acide lactique), la température de cristallisation par refroidissement n'est pas inférieure à 130 °C lorsque la température dudit copolymère séquencé de poly(acide lactique) est augmentée à 250 °C à un taux de chauffage de 20 °C et ensuite gardée constante pendant 3 minutes, ce qui est suivi de la diminution de la température à un taux de refroidissement de 20 °C/min.

**4.** Copolymère séquencé de poly(acide lactique) selon l'une quelconque des revendications 1 à 3, dans lequel la polydispersité représentée par le rapport entre le poids moléculaire moyen en poids et le poids moléculaire moyen en nombre n'est pas supérieure à 2,7, mesurée par chromatographie d'exclusion diffusion (CED) en utilisant de l'hexafluoroisopropanol en tant que solvant et calculée en termes d'étalons de poly(méthacrylate de méthyle).

**5.** Copolymère séquencé de poly(acide lactique) selon l'une quelconque des revendications 1 à 4, dans lequel la longueur moyenne de séquence des motifs d'acide lactique L et des motifs d'acide lactique D dans ledit copolymère séquencé de poly(acide lactique) n'est pas inférieure à 20, calculée par mesure par $^{13}$C-RMN selon l'Équation (5) ci-dessous, dans laquelle (a) représente la valeur intégrée du pic à 170,1 à 170,3 ppm parmi les pics des atomes de carbone appartenant à l'atome de carbone de carbonyle et (b) représente la valeur intégrée du pic à 169,8 à 170,0 ppm

$$\text{Longueur moyenne de séquence} = (a)/(b) \qquad (5).$$

**6.** Copolymère séquencé de poly(acide lactique) selon l'une quelconque des revendications 1 à 5, dans lequel le rapport pondéral entre le composant acide lactique L et le composant acide lactique D dans ledit copolymère séquencé de poly(acide lactique) se situe dans la plage de 80/20 à 60/40 ou dans la plage de 40/60 à 20/80.

**7.** Copolymère séquencé de poly(acide lactique) selon l'une quelconque des revendications 1 à 6, dont le poids moléculaire moyen en poids n'est pas inférieur à 100 000.

**8.** Produit moulé comprenant le copolymère séquencé de poly(acide lactique) selon l'une quelconque des revendications 1 à 7, ledit produit moulé ayant un degré relatif de cristallinité non inférieur à 90 % et comprenant une partie ayant une valeur de trouble non supérieure à 30 % lorsque l'épaisseur dudit produit moulé est de 100 μm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003096285 A
- JP 2003238672 A
- JP 2006028336 A
- JP 2006307071 A
- US 2008039579 A1

**Non-patent literature cited in the description**

- **M. HIRATA et al.** POLYMER CHEMISTRY. *JOURNAL OF POLYMER SCIENCE,* 15 February 2010, vol. 48 (4), 794-801